# FASCICULE DE BREVET EUROPEEN

(11) **EP 2 316 910 B1**
(45) Date de publication et mention de la délivrance du brevet: **12.09.2012**
(21) Numéro de dépôt: 10290565.0
(22) Date de dépôt: 19.10.2010
(51) Int. Cl.: C10G 3/00, C10G 65/04

(54) **Procédé d'hydrotraitement de charges issues de sources renouvelables avec chauffe indirecte mettant en oeuvre un catalyseur à base de nickel et de molybdene presentant un rapport atomique particulier**
Verfahren für die Hydrobehandlung von erneurerbaren Quellen durch indirekte Erhitzung mittels Einsatz eines katalysators auf Nickel- und Molybdenbasis mit einem spezifischen Atomverhältnis
Process for hydrotreating renewable sources with indirect heating implementing a nickel and molybdenum catalyst with a specific atomic ratio

(30) Priorité: 27.10.2009 FR 0905159
(43) Date de publication de la demande: 04.05.2011
(73) Titulaire: IFP Energies nouvelles, 92852 Rueil-Malmaison Cedex (FR)
(72) Inventeur: Weiss, Wilfried, 69007 Lyon (FR); Bournay, Laurent, 69440 Chaussan (FR); Chapus, Thierry, 69001 Lyon (FR); Daudin, Antoine, 69960 Corbas (FR)

(56) Documents cités:
- EP-A1- 1 741 768
- WO-A1-2008/101945
- WO-A2-2009/015055
- FR-A1- 2 917 423
- US-A1- 2009 082 603
- US-A1- 2009 253 948
- HUBER GEORGE W ET AL: "Synthesis of transportation fuels from biomass: Chemistry, catalysts, and engineering", CHEMICAL REVIEWS, ACS,WASHINGTON, DC, US LNKD- DOI:10.1021/CR068360D, vol. 106, no. 9, 1 septembre 2006 (2006-09-01), pages 4044-4098, XP002490759, ISSN: 0009-2665 [extrait le 2006-06-27]

## Description

### Domaine de l'invention

Le contexte international des années 2005-2010 est marqué d'abord par la croissance rapide en besoin de carburants, en particulier de bases gazoles dans la communauté européenne et ensuite par l'importance des problématiques liées au réchauffement planétaire et l'émission de gaz à effet de serre. Il en résulte une volonté de réduire la dépendance énergétique vis à vis des matières premières d'origine fossile et de réduction des émissions de CO₂. Dans ce contexte, la recherche de nouvelles charges issues de sources renouvelables et pouvant être facilement intégrées au schéma traditionnel du raffinage et de la production de carburants constitue un enjeu d'une importance croissante.

A ce titre, l'intégration dans le processus de raffinage de nouveaux produits d'origine végétale, issus de la conversion de la biomasse lignocellulosique ou issus de la production d'huiles végétales ou de graisses animales, a connu ces dernières années un très vif regain d'intérêt en raison de l'augmentation du coût des matières fossiles. De même, les biocarburants traditionnels (éthanol ou esters méthyliques d'huiles végétales principalement) ont acquis un réel statut de complément aux bases pétrolières dans les pools carburants.

La forte demande en carburants gazoles et kérosène, couplée avec l'importance des préoccupations liées à l'environnement renforce l'intérêt d'utiliser des charges issues de sources renouvelables. Parmi ces charges, on peut citer par exemple les huiles végétales (alimentaires ou non) ou issues d'algues, les graisses animales ou les huiles de fritures usagées, brutes ou ayant subi un traitement préalable, ainsi que les mélanges de telles charges.

Ces charges contiennent essentiellement des structures chimiques de type triglycérides que l'homme du métier connait également sous l'appellation tri ester d'acides gras ainsi que des acides gras libres et les chaînes hydrocarbonées qui constituent ces molécules sont essentiellement linéaires et possèdent chacune, un nombre d'insaturations par chaînes généralement compris entre 0 et 3 mais qui peut être plus élevé notamment pour les huiles issues d'algues qui peuvent présenter un nombre d'insaturations par chaînes de 5 à 6.

Les huiles végétales et autres charges d'origine renouvelable comportent également différentes impuretés et notamment des composés contenant des hétéroatomes tels que l'azote, et des éléments tels que Na, Ca, P, Mg.

La masse moléculaire très élevée (supérieure à 600 g/mol) des triglycérides et la viscosité élevée des charges considérées font que leur utilisation directe ou en mélange dans les gazoles posent des difficultés pour les moteurs modernes de type HDI (compatibilité avec les pompes d'injection à très haute pression, problème d'encrassement des injecteurs, combustion non maîtrisée, rendements faibles, émissions d'imbrûlés toxiques). Cependant, les chaînes hydrocarbonées qui constituent les triglycérides sont essentiellement linéaires et leur longueur (nombre d'atomes de carbone) est compatible avec les hydrocarbures présents dans les gazoles. Il est donc nécessaire de transformer ces charges pour obtenir une base gazole de bonne qualité et/ou une coupe kérosène répondant aux spécifications en vigueur, après mélange ou ajout d'additif connu de l'homme de l'art. Pour le diesel, le carburant final doit répondre à la norme EN590 et pour le kérosène, il doit répondre aux spécifications décrites dans IATA (International Air Transport Association) Guidance Material for Aviation Turbine Fuel Specifications telle que la norme ASTM D1655.

L'hydrotraitement d'huiles végétales met en oeuvre des réactions complexes qui sont favorisées par un système catalytique hydrogénant. Ces réactions comprennent notamment:
- l'hydrogénation des insaturations,
- la désoxygénation selon deux voies réactionnelles:
   - l'hydrodeoxygentaion : élimination de l'oxygène par consommation d'hydrogène et conduisant à la formation d'eau
   - la décarboxylation/décarbonylation : élimination de l'oxygène par formation de monoxyde et dioxyde de carbone : CO et CO2
   - l'hydrodéazotation : élimination de l'azote par formation de NH3.

Les catalyseurs sulfures sont connus pour être actifs vis à vis des réactions d'hydrotraitement: hydrodésulfuration, hydrodésazotation, hydrodésoxygénantion et hydrodémétallation.

De nombreux travaux de la littérature font état de leur potentiel pour les réactions de désoxygénation mises en jeu pour la transformation catalytique de bio-liquide (provenant d'oléagineaux ou de la lignocellulose) en carburant. Notamment, Senol et al (Applied Catalysis A: General vol. 326,2007, p.236-244) ont étudié la transformation de molécule modèle de type ester représentative de la fonction hydrophile (groupement ester) et lipophile (chaîne alkyle) des triglycérides présent dans les huiles végétales en présence de catalyseurs sulfures CoMo ou NiMo/AI2O3.

Contrairement aux catalyseurs à base de métaux réduit, l'utilisation de solides à bases de sulfures de métaux de transition permettent la production de paraffines à partir de molécule de type ester selon deux voies réactionnelles : l'hydrodésoxygénation et la décarboxylation/décarbonylation.

L'hydrogénation des insaturations (doubles liaisons carbone-carbone) est fortement exothermique et l'augmentation de température résultant du dégagement de chaleur des réactions de saturation des doubles liaisons permet d'atteindre les niveaux thermiques où les vitesses des réactions de désoxygénation/décarbonylation commencent à être significatives. L'hydrodésoxygenation et la décarboxylation/décarbonylation sont également des réactions exothermiques. L'hydrodéazotation, est une réaction plus difficile, nécessitant des conditions de température plus sévères que l'hydrodesoxygenation et la décarboxylation/décarbonylation. Or, l'hydrodéazotation est généralement nécessaire car les composés azotés sont généralement des poisons des catalyseurs d'hydroisomérisation généralement mis en oeuvre en aval d'un procédé d'hydrotraitement de charges issues de sources renouvelables. Ainsi, en raison de la nature fortement exothermique de l'ensemble des réactions mises en oeuvre, un contrôle de la température du milieu réactionnel s'avère très important car un niveau trop élevé des températures favorise :
- l'auto entretient, voire l'emballement des réactions par effet d'accélération thermique des cinétiques.
- des réactions secondaires indésirables, telles que par exemple la polymérisation, le cokage des catalyseurs ou encore des réactions de craquage.

La demande de brevet US2009/0253948 décrit un procédé de production de produit hydrocarbonés à partir d'une huile de pyrolyse comprenant une étape de deoxygénation partielle en présence d'un catalyseur d'hydrogénation tel qu'un catalyseur à base de nickel ou de nickel et de molybdène dispersé sur un support présentant une surface élevée ou un catalyseur d'hydrogénation comprenant un ou plusieurs métaux nobles dispersé sur un support présentant une surface élevée. L'étape de deoxygénation partielle est suivie d'une étape de séparation de l'eau, des gaz et d'un effluent hydrocarboné qui est envoyé dans une deuxième étape de deoxygenation totale en présence d'un catalyseur d'hydrocraquage à base de nickel ou de nickel et de molybdène dispersé sur un support présentant une surface élevée ou un catalyseur composite à base de zéolithe et de silice alumine amorphe.

La demande de brevet EP 1 741 768 décrit un procédé comprenant une étape d'hydrotraitement d'huilé végétale contenant plus de 5% poids d'acides gras libres dans laquelle le produit hydrotraité est recyclé, en tant qu'agent de dilution de la charge fraîche, de manière à contrôler l'exothermie des réactions et à opérer à température réduite. L'étape d'hydrotraitement opère à une température comprise entre 200 et 400°C et à un taux de recycle liquide compris entre 5 et 30 afin de limiter la formation de polymères qui provoquent des bouchages dans la section de préchauffe et qui diminue l'activité et la durée de vie du catalyseur. Cette solution entraîne un surcoût des équipements et des utilités consommées du fait du surplus de capacité hydraulique induite par le taux de recycle liquide élevé. L'étape d'hydrotraitement est ensuite suivie d'une étape d'hydroisomérisation afin d'améliorer les propriétés à froid des paraffines linéaires obtenues. L'étape d'hydrotraitement dans laquelle la charge est simultanément désoxygénée, et désulfurée, est avantageusement mise en oeuvre dans un réacteur comprenant au moins un lit catalytique et le produit hydrotraité est recyclé et mélangé avec la charge fraîche, à la fois, en tête du premier lit catalytique et sous forme de quench liquide de refroidissement, également en mélange avec la charge fraîche et un flux d'hydrogène en tête de chaque autre lit catalytique. Ce principe permet d'opérer à température réduite en tête de chaque autre lit catalytique suivant le premier.

La présente invention fournit un perfectionnement de ce principe en proposant un schéma de procédé d'hydrotraitement, permettant par la mise en oeuvre d'un recycle de liquide en entrée de chaque zone catalytique, un contrôle précis des températures, une maîtrise améliorée de l'exothermie et des différentes réactions ayant lieu dans les différentes zones catalytiques.

Un des objectifs de la présente invention est donc de contrôler l'avancement et l'exothermie des réactions dans les différentes zones réactionnelles mises en oeuvre, tout en assurant l'apport de chaleur nécessaire au démarrage et au contrôle des différentes réactions et en particulier l'hydrodéazotation nécessitant des conditions opératoires en température spécifiques.

Un autre objectif de la présente invention est de fournir un procédé visant à maximiser le rendement en gazole et/ou en kérosène, en cherchant à promouvoir le mécanisme d'hydrodésoxygénation par un choix des catalyseurs et des conditions opératoires tout en cherchant à limiter au strict nécessaire la consommation d'hydrogène, et en particulier celle qui résulterait de réactions non désirées, telle que la méthanation.

Un autre objectif de la présente invention est de fournir un procédé visant à convertir des charges issues de sources renouvelables en n-paraffines par hydrotraitement sous pression d'hydrogène, les n-paraffines ainsi obtenues étant ensuite hydroisomérisées dans une unité en aval dédiée, de façon à obtenir un bon compromis entre les caractéristiques de cétane et les propriétés à froid, afin de produire une base de haute qualité incorporable au pool gazole ainsi qu'une coupe kérosène répondant aux spécifications.

La présente invention porte donc sur un schéma de procédé d'hydrotraitement permettant simultanément un contrôle précis des températures de réaction mises en oeuvre dans les différentes zones catalytiques et le chauffage du système de manière indirecte, par la mise en oeuvre d'un recycle de liquide en entrée de chaque zone catalytique, tout en visant à orienter la sélectivité au bénéfice de l'hydrodésoxygénation et en assurant l'hydrodéazotation des charges décrites ci-dessus.

Plus précisément, l'invention concerne un procédé de traitement de charges issues de sources renouvelables comprenant :
- une étape a) d'hydrotraitement comprenant au moins deux zones catalytiques dans laquelle le flux entrant comprenant ladite charge en mélange avec au moins une partie d'un l'effluent liquide hydrotraité issu de l'étape b) et un gaz riche en hydrogène, est introduit dans la première zone catalytique à une température comprise entre 150 et 260 °C, et dans laquelle l'effluent issu de la première zone catalytique est ensuite introduit, en mélange avec au moins une partie d'un l'effluent liquide hydrotraité issu de l'étape b), et préchauffé, dans la ou les zones catalytiques suivantes à une température comprise entre 260 et 320 °C,
- une étape b) de séparation de l'effluent issu de l'étape a) d'hydrotraitement permettant la séparation d'un effluent gazeux et d'un effluent liquide hydrotraité dont au moins une partie est recyclée en tête de chaque zone catalytique de l'étape a),
ledit procédé mettant en oeuvre dans au moins la ou les zones catalytiques suivants la première de l'étape a) d'hydrotraitement, un catalyseur massique ou supporté comprenant une phase active constituée d'au moins un élément du groupe VIB et d'au moins un élément du groupe VIII, lesdits éléments étant sous forme sulfure et le rapport atomique du métal (ou métaux) du groupe VIII sur métal (ou métaux) du groupe VIB, étant strictement supérieur à 0 et inférieur à 0,095.

Nous avons donc découvert que l'utilisation d'un catalyseur particulier dans l'étape a) d'hydrotraitement du procédé selon l'invention permettait de privilégier très fortement le schéma réactionnel selon la voie hydrodéoxygénation (HDO), ce qui a pour effet de diminuer très sensiblement la production de CO et de CO₂.

En particulier, selon un mode de réalisation préférée, la mise en oeuvre de cet enchaînement utilisant dans la première zone catalytique de l'étape a) d'hydrotraitement un catalyseur d'hydrodéoxygénation particulier privilégiant la voie HDO suivi d'au moins une seconde zone catalytique utilisant un catalyseur selon l'invention, permet, du fait de l'absence de CO et de CO₂ formés dans la première zone catalytique, et par rapport à une mise en oeuvre sur catalyseur d'hydrotraitement classique:
- d'éviter les phénomènes de corrosion, ce qui permet d'utiliser plus facilement les unités déjà existantes de raffinage. En effet, la présence de CO et de CO2 impliquerait d'utiliser des matériaux résistants à la corrosion, plus coûteux, et éventuellement de modifier assez sensiblement les unités existantes en raffinerie et donc d'augmenter le montant des investissements requis.
- d'améliorer le rendement en base carburant, gazole et kérosène, puisque l'excellente sélectivité vers la voie hydrodéoxygénation (HDO) permet de former des paraffines de même nombre d'atomes de carbone que les chaînes d'acides gras présentes dans les charges issues de source renouvelable.
- de réduire l'importance de la section de purification du gaz de recycle. En effet, en présence de CO et de CO₂ formé, il conviendrait d'une part d'augmenter la taille de la section de lavage aux amines assurant la purification du gaz de recycle, de façon à éliminer l'H₂S mais également le CO₂ et d'autre part de prévoir une section de méthanation ou de Water Gas Shift pour éliminer le CO ne pouvant être traité par lavage aux amines.

### Description de l'invention.

La présente invention concerne un procédé de traitement de charges provenant de sources renouvelables, pour la conversion en bases carburants gazoles et kérosène.

Les charges issues de sources renouvelables utilisées dans la présente invention sont avantageusement choisies parmi les huiles et graisses d'origine végétale ou animale, ou des mélanges de telles charges, contenant des triglycérides et/ou des acides gras libres et/ou des esters. Les huiles végétales peuvent avantageusement être brutes ou raffinées, totalement ou en partie, et issues des végétaux suivants : colza, tournesol, soja, palme, palmiste, olive, noix de coco, jatropha, cette liste n'étant pas limitative. Les huiles d'algues ou de poisson sont également pertinentes. Les graisses animales sont avantageusement choisies parmi le lard ou les graisses composées de résidus de l'industrie alimentaire ou issus des industries de la restauration.

Ces charges contiennent essentiellement des structures chimiques de type triglycérides que l'homme du métier connait également sous l'appellation tri ester d'acides gras ainsi que des acides gras libres. Un tri ester d'acide gras est ainsi composé de trois chaînes d'acides gras. Ces chaînes d'acide gras sous forme de tri ester ou sous forme d'acide gras libres, possèdent un nombre d'insaturations par chaîne, également appelé nombre de doubles liaisons carbone carbone par chaîne, généralement compris entre 0 et 3 mais qui peut être plus élevé notamment pour les huiles issues d'algues qui présentent généralement un nombre d'insaturations par chaînes de 5 à 6.

Les molécules présentes dans les charges issues de sources renouvelables utilisées dans la présente invention présentent donc un nombre d'insaturations, exprimé par molécule de triglycéride, avantageusement compris entre 0 et 18. Dans ces charges, le taux d'insaturation, exprimé en nombre d'insaturations par chaîne grasse hydrocarbonée, est avantageusement compris entre 0 et 6.

Les charges issues de sources renouvelables comportent généralement également différentes impuretés et notamment des hétéroatomes tels que l'azote. Les teneurs en azote dans les huiles végétales sont généralement comprises entre 1 ppm et 100 ppm poids environ, selon leur nature. Elles peuvent atteindre jusqu'à 1% poids sur des charges particulières.

La présence d'insaturations, c'est à dire de doubles liaisons carbone-carbone, sur les chaînes hydrocarbonées constituant les acides gras libres comme sur celles constituants les triglycérides rend ladite charge instable thermiquement. Par ailleurs, l'hydrogénation de ces insaturations est fortement exothermique.

Le procédé de traitement selon l'invention mis en oeuvre doit être, à la fois, particulièrement flexible pour pouvoir traiter des charges très différentes en terme d'insaturations telles que les huiles de Soja et de Palme par exemple ou encore des huiles d'origine animales ou issues d'algues telles que définies ci dessus, et pour permettre d'amorcer la réaction d'hydrogénation des insaturations à une température la plus basse possible en évitant un chauffage au contact d'une paroi qui provoquerait des points chauds de ladite charge, qui induirait la formation de gommes et provoquerait un encrassement et une augmentation de la perte de charge du ou des lits de catalyseurs.

### Étape a)

Conformément au procédé selon l'invention, le flux entrant, comprenant ladite charge en mélange avec au moins une partie de l'effluent liquide hydrotraité issu de l'étape b) et un gaz riche en hydrogène, est introduit dans la première zone catalytique à une température comprise entre 150 et 260 °C, de préférence à une température comprise entre 180 et 230°C, de manière préférée comprise entre 180 et 220°C, de manière encore plus préférée comprise entre 180 et 210°C, et de manière encore plus préférée à une température égale à 200°C selon l'étape a) d'hydrotraitement.

Avant mélange avec une partie de l'effluent liquide hydrotraité et éventuellement avant mélange avec un gaz riche en hydrogène, la charge arrive à température ambiante ou éventuellement à une température plus élevée, comprise entre 50°C et 200°C, par une opération de préchauffage avec un échangeur ou un four du moment que la température de paroi soit suffisamment faible pour ne pas former de gommes.

Au moins une partie de l'effluent liquide hydrotraité issu de l'étape b) peut avantageusement être soit refroidi, soit pré-chauffé, avant d'être recyclé en tête de la première zone catalytique , de l'étape a) d'hydrotraitement, selon la température et le débit de charge et d'hydrogène, de manière à ce que la température du flux entrant, comprenant ladite charge en mélange avec au moins une partie dudit effluent liquide hydrotraité et d'un gaz riche en hydrogène, soit comprise entre 180 et 230 °C, de manière préférée comprise entre 180 et 220°C et de manière encore plus préférée comprise entre 180 et 210°C et de manière encore plus préférée à une température égale à 200°C.

Dans le cas ou au moins une partie de l'effluent liquide hydrotraité issu de l'étape b) de séparation est pré-chauffé avant d'être recyclé en tête de la première zone catalytique de l'étape a) d'hydrotraitement, ledit effluent passe éventuellement dans au moins un échangeur et/ou au moins un four avant d'être recyclé en tête de la première zone catalytique de l'étape a) d'hydrotraitement, de manière à ajuster la température dudit effluent liquide hydrotraité et recyclé.

Dans le cas ou au moins une partie de l'effluent liquide hydrotraité issu de l'étape b) de séparation est refroidi avant d'être recyclé en amont de la première zone catalytique de l'étape a) d'hydrotraitement, ledit effluent passe éventuellement dans au moins un échangeur et/ou au moins un aéroréfrigérant avant d'être recyclé en amont de la première zone catalytique de l'étape a) d'hydrotraitement, de manière à ajuster la température dudit effluent liquide hydrotraité et recyclé.

La mise en oeuvre du recycle en amont de la première zone catalytique, d'au moins une partie de l'effluent liquide hydrotraité et séparé issu de l'étape b) qui peut être soit refroidi soit préchauffé, si nécessaire, soit gardé à la même température qu'en sortie de l'étape b) de séparation, permet donc d'ajuster la température du flux entrant dans ladite première zone catalytique, selon le besoin. Ainsi, l'élévation de température de la charge est provoquée par mélange avec un liquide plus chaud, et non par contact avec une paroi chauffée. Cela permet, dans le cas ou l'effluent liquide hydrotraité est pré-chauffé de limiter localement les températures élevées. En effet lors d'un chauffage dans un échangeur de chaleur ou dans un four, pour atteindre une température de consigne T donnée, la température côté chaud doit impérativement être supérieure à T afin de réaliser le transfert de chaleur de façon économique. Il est bien connu de l'homme du métier que le flux de chaleur à travers une paroi dépend d'abord de l'écart de température de part et d'autre de ladite paroi et de la surface d'échange. Un faible écart de température entre côté froid et chaud impliquera, pour une quantité de chaleur échangée donnée, une plus grande surface d'échange. Il en résulte une température de la paroi en contact avec le fluide froid plus élevée que la température désirée appelée communément température de peau. Un chauffage par mélange direct avec un fluide chaud permet ainsi d'éviter l'effet de température de peau et donc de limiter les zones de température élevées. Ce type de chauffe par mélange avec un liquide chaud inerte permet donc de limiter les réactions indésirables décrites ci dessus, et d'ajuster la température d'entrée du flux dans la première zone catalytique de l'étape a) de manière à amorcer la réaction d'hydrogénation des insaturations, de préférence à une température la plus basse possible, tout en contrôlant l'exothermie de ces réactions par un effet de dilution des espèces réactives.

L'énergie nécessaire à la réaction et plus précisément, l'ajustement de la température minimale nécessaire à l'activation des réactions de saturation des doubles liaisons est donc principalement atteinte en mélangeant, en amont d'une première zone catalytique, ladite charge issue de source renouvelable et un gaz riche en hydrogène, avec un recyclage de l'effluent hydrotraité liquide issu de l'étape b) de séparation, ayant éventuellement subi un ajustement de température et de préférence ayant été soit pré-chauffé soit refroidi.

Selon l'invention, un flux de gaz riche en hydrogène est mélangé à ladite charge fraîche et/ou à une partie de l'effluent liquide hydrotraité, de préférence en amont de la première zone catalytique. Le flux de gaz riche en hydrogène peut avantageusement venir d'un appoint d'hydrogène et/ou du recyclage de l'effluent gazeux issu de l'étape b) de séparation, l'effluent gazeux contenant un gaz riche en hydrogène ayant préalablement subi un ou plusieurs traitements de purification intermédiaire avant d'être recyclé et mélangé à la charge et/ou à une partie de l'effluent liquide hydrotraité.

En amont de la première zone catalytique, le flux gazeux riche en hydrogène peut avantageusement être soit chauffé soit refroidi, selon le cas.

Ainsi, le flux de gaz riche en hydrogène peut avantageusement être pré-chauffé ou refroidi, avant mélange avec une partie de l'effluent liquide hydrotraité et/ou avec la charge ou après mélange avec une partie dudit effluent liquide hydrotraité et/ou avec la charge, de manière à ajuster la température d'entrée du flux entrant dans la première zone catalytique.

Ainsi, les conditions de températures utilisées en entrée dans la première zone catalytique de l'étape a) du procédé selon l'invention permettent d'amorcer la réaction d'hydrogénation des insaturations tout en contrôlant l'exothermie de ces réactions, de sorte que la variation de température entre le flux entrant, comprenant ladite charge en mélange avec au moins une partie de l'effluent liquide hydrotraité issu de l'étape b) et un gaz riche en hydrogène, et l'effluent sortant la première zone réactionnelle est avantageusement limité entre 50 à 60°C. Ainsi, l'effluent sort de la première zone catalytique à une température avantageusement comprise entre 200 et 320°C, de préférence comprise entre 230 et 290°C, de manière très préférée comprise entre 230 et 280°C et de manière plus préférée comprise entre 230 et 270°C et de manière encore plus préférée, la température n'excède pas 260°C.

Ce principe permet ainsi d'opérer à température réduite en tête de la première zone catalytique et donc d'abaisser globalement le niveau moyen de température de la zone réactionnelle ce qui favorise les réactions d'hydrogénolyse donc le rendement en base gazole et/ou kérosène.

Le taux d'hydrogénation des insaturationdes triglycérides de la charge en sortie de la première zone catatytique, c'est à dire la saturation de ladite charge ainsi obtenue est suivie par la mesure de l'indice d'iode selon la norme NF ISO 3961. Le taux d'hydrogénation des insaturation de ladite charge est avantageusement comprise entre 70 et 80% molaire c'est à dire que 80% du nombre des insaturations présentes dans la charge initiale sont saturées.

La chaleur dégagée par la saturation des doubles liaisons permettent d'élever la température du milieu réactionnel et d'amorcer les réactions de désoxygénation par les mécanismes d'hydrodésoxygenation et décarboxylation/décarbonylation dans ladite première zone catalytique.

Le taux de désoxygénation en pourcentage molaire est suivi par la mesure de la concentration en oxygène par analyse élémentaire.

Dans la première zone catalytique, les conditions opératoires utilisées permettent d'atteindre un taux de désoxygénation compris entre 30 et 50% et de préférence entre 35 et 40% molaire c'est à dire que 30 à 50% mol de l'oxygène présent est converti.

Selon l'invention, une étape a) d'hydrotraitement comprend au moins deux zones catalytiques et de préférence, l'étape a) comprend deux zones catalytiques.

Le catalyseur d'hydrotraitement utilisé dans la première zone catalytique de l'étape a) du procédé selon l'invention comprend avantageusement une fonction hydro-déshydrogénante comprenant au moins un métal du groupe VIII et/ou au moins un métal du groupe VI B et un support choisi dans le groupe formé par l'alumine, la silice, les silices-alumines, la magnésie, les argiles et les mélanges d'au moins deux de ces minéraux. Ledit support peut également avantageusement renfermer d'autres composés et par exemple des oxydes choisis dans le groupe formé par l'oxyde de bore, la zircone, l'oxyde de titane, l'anhydride phosphorique. De manière préférée, le support est constitué d'alumine et de manière très préférée d'alumine η, δ ou γ.

De préférence, ledit catalyseur comprend avantageusement au moins un métal du groupe VIII choisi parmi le nickel et le cobalt et au moins un métal du groupe VIB choisi parmi le molybdène et le tungstène, pris seuls ou en mélange.

Ledit catalyseur utilisé dans la première zone catalytique de l'étape a) du procédé selon l'invention peut également avantageusement contenir au moins un élément dopant choisi parmi le phosphore et le bore. Cet élément peut être avantageusement introduit dans la matrice ou de préférence être déposé sur le support. On peut également avantageusement déposer du silicium sur le support, seul ou avec le phosphore et/ou le bore et/ou le fluor.

La teneur en poids d'oxyde dudit élément dopant est avantageusement inférieure à 20 % et de manière préférée inférieure à 10 % et elle est habituellement avantageusement d'au moins 0.001 %.

Les métaux des catalyseurs utilisés dans la première zone catalytique de l'étape a) du procédé selon l'invention sont avantageusement des métaux sulfurés ou des phases métalliques.

Dans le cas ou les métaux sont sulfurés, les méthodes de sulfuration sont les méthodes classiques, connues de l'homme du métier.

Un catalyseur préféré utilisé dans la première zone catalytique de l'étape a) du procédé selon l'invention est avantageusement un catalyseur massique ou supporté comprenant une phase active constituée d'au moins un élément du groupe VIB et d'au moins un élément du groupe VIII, lesdits éléments étant sous forme sulfure et le rapport atomique du métal (ou métaux) du groupe VIII sur métal (ou métaux) du groupe VIB, étant strictement supérieur à 0 et inférieur à 0,095.

On appelle phase active, la phase contenant le ou les éléments sous forme sulfure des groupes des métaux, en l'occurrence la phase active du catalyseur utilisée dans la première étape d'hydrotraitement a) est constituée d'au moins un élément sulfuré du groupe VIB et d'au moins un élément sulfuré du groupe VIII.

Conformément à la présente invention, le catalyseur mis en oeuvre dans la première zone catalytique de l'étape a) d'hydrotraitement du procédé selon l'invention peut être supporté. Il comporte avantageusement un support minéral amorphe de préférence choisi dans le groupe formé par l'alumine, la silice, les silices-alumines, la magnésie, les argiles et les mélanges d'au moins deux de ces minéraux et de préférence ledit support est l'alumine. Ledit support peut également avantageusement renfermer d'autres composés tels que par exemple des oxydes choisis dans le groupe formé par l'oxyde de bore, la zircone et l'oxyde de titane.

De manière préférée, le support minérale amorphe est constitué uniquement d'alumine et de manière très préférée uniquement d'alumine η, δ ou γ. Ainsi, dans ce mode de réalisation préféré, ledit support ne contient aucun autre composé et est constitué à 100% d'alumine.

Conformément au procédé selon l'invention, la phase active dudit catalyseur sous forme supporté ou massique est constituée d'au moins un élément du groupe VIB et d'au moins un élément du groupe VIII, ledit élément du groupe VIB étant choisi parmi le molybdène et le tungstène et de préférence, ledit élément du groupe VIB est le molybdène et ledit élément du groupe VIII est choisi parmi le nickel et le cobalt et de préférence ledit élément du groupe VIII est le nickel.

Conformément au procédé selon l'invention, le rapport atomique du métal (ou métaux) du groupe VIII sur métal (ou métaux) du groupe VIB, étant strictement supérieur à 0 et inférieur à 0,095, de préférence compris entre 0,01 et 0,08, de manière préférée entre 0,01 et 0,05 et de manière très préférée entre 0,01 et 0,03.

De préférence, le métal du groupe VIB est le molybdène et le métal du groupe VIII est le nickel et le rapport atomique du métal du groupe VIII sur métal du groupe VIB, c'est à dire le rapport atomique Ni/Mo, est strictement supérieur à 0 et inférieur à 0,095, de préférence compris entre 0,01 et 0,08, de manière préférée entre 0,01 et 0,05 et de manière très préférée entre 0,01 et 0,03.

Dans le cas où ledit catalyseur est sous forme supportée, la teneur en oxyde d'élément du groupe VIB est avantageusement comprise entre 1 % et 30 % poids par rapport à la masse totale du catalyseur, de préférence comprise entre 10 et 25 % poids, de manière très préférée entre 15 % et 25 % poids et de manière encore plus préférée entre 17 et 23% poids et la teneur en oxyde d'élément du groupe VIII est avantageusement strictement supérieure à 0 % et inférieure à 1,5 % poids par rapport à la masse totale du catalyseur, de préférence comprise entre 0,05 % et 1,1 % poids, de manière très préférée entre 0,07 % et 0,65 % poids et de manière encore plus préférée entre 0,08 et 0,36% poids.

La valeur minimale du rapport atomique Ni/Mo égal à 0,01, pour une teneur en oxyde de molybdène de 1% poids, dans le cadre de l'invention, correspond à une teneur en nickel de 50 ppm poids, détectable par les techniques usuelles d'analyse élémentaire par ICP (Inductively coupled plasma ou selon la terminologie française par plasma inductif), ladite limite de détection du nickel étant de l'ordre du ppm.

Dans le cas où ledit catalyseur est sous forme massique, les teneurs en oxyde des éléments des groupes VIB et VIII sont définies par les rapports atomiques du métal (ou métaux) du groupe VIII sur métal (ou métaux) du groupe VIB définis selon l'invention.

Pour un rapport atomique du métal (ou métaux) du groupe VIII sur métal (ou métaux) du groupe VIB strictement supérieur à 0 et inférieur à 0,095, la teneur en élément du groupe VIB est avantageusement supérieure à 95,3% et strictement inférieure à 100% poids en équivalent oxyde de l'élément du groupe VIB et la teneur en élément du groupe VIII est avantageusement strictement supérieur à 0 et inférieure à 4,7% poids en équivalent oxyde de l'élément du groupe VIII.

Pour un rapport atomique du métal (ou métaux) du groupe VIII sur métal (ou métaux) du groupe VIB compris entre 0,01 et 0,08, la teneur en élément du groupe VIB est avantageusement comprise entre 96 et 99,4% poids en équivalent oxyde de l'élément du groupe VIB et la teneur en élément du groupe VIII est avantageusement comprise entre 0,6 et 4% poids en équivalent oxyde de l'élément du groupe VIII.

Pour un rapport atomique du métal (ou métaux) du groupe VIII sur métal (ou métaux) du groupe VIB compris entre 0,01 et 0,05, la teneur en élément du groupe VIB est avantageusement comprise entre 97,4 et 99,4% poids en équivalent oxyde de l'élément du groupe VIB et la teneur en élément du groupe VIII est avantageusement comprise entre 0,6 et 2,6% poids en équivalent oxyde de l'élément du groupe VIII.

Pour un rapport atomique du métal (ou métaux) du groupe VIII sur métal (ou métaux) du groupe VIB compris entre 0,01 et 0,03, la teneur en élément du groupe VIB est avantageusement comprise entre 98,4 et 99,4% poids en équivalent oxyde de l'élément du groupe VIB et la teneur en élément du groupe VIII est avantageusement comprise entre 0,6 et 1,6% poids en équivalent oxyde de l'élément du groupe VIII.

De préférence, et dans le cas ou ledit catalyseur est sous forme supporté, ledit catalyseur comprend également au moins un élément dopant choisis parmi le phosphore, le fluor, le silicium et le bore et de préférence, l'élément dopant est le phosphore, afin d'atteindre un niveau de conversion élevé tout en maintenant une sélectivité de réaction pour la voie d'hydrodésoxygénation. De préférence, et dans le cas ou ledit catalyseur est sous forme supporté, ledit élément dopant est avantageusement déposé sur le support. On peut également avantageusement déposer du silicium sur le support, seul ou avec le phosphore et/ou le bore et/ou le fluor.

Il est connu de l'homme de l'art que ces éléments ont des effets indirect sur l'activité catalytique: une meilleure dispersion de la phase active sulfurée et une augmentation de l'acidité du catalyseur favorable aux réactions d'hydrotraitement (Sun et al, Catalysis Today 86(2003) 173).

Dans le cas ou ledit catalyseur est sous forme supportée, la teneur en élément dopant, ledit élément dopant étant de préférence le phosphore, est avantageusement strictement supérieure à 0,5% et inférieure à 8 % poids d'oxyde P₂O₅ par rapport à la masse totale du catalyseur et de préférence supérieure à 1% et inférieure à 8% et de manière très préférée supérieure à 3% et inférieure à 8% poids.

Dans le cas de l'utilisation de catalyseur supporté, la fonction hydrogénante peut être introduite sur ledit catalyseur par toute méthode connue de l'homme du métier comme par exemple le comalaxage, l'imprégnation à sec etc....

Conformément à la présente invention, ledit catalyseur peut alternativement être massique, dans ce cas, ledit catalyseur ne contient pas de support.

Le catalyseur utilisé dans la première zone catalytique du procédé selon l'invention, dans le cas ou ledit catalyseur est sous forme massique, peut également avantageusement contenir au moins un élément dopant choisis parmi le phosphore, le fluor, le silicium et le bore et de préférence, l'élément dopant est le phosphore, afin d'atteindre un niveau de conversion élevé tout en maintenant une sélectivité de réaction pour la voie d'hydrodésoxygénation.

Dans le cas ou ledit catalyseur est sous forme massique, ledit élément dopant est avantageusement déposé sur la phase active.

Dans le cas ou ledit catalyseur est sous forme massique, la teneur en élément dopant, ledit élément dopant étant de préférence le phosphore, est avantageusement strictement supérieure à 0,5% et inférieure à 8 % poids d'oxyde P₂O₅ par rapport à la masse totale du catalyseur et de préférence supérieure à 1% et inférieure à 8% et de manière très préférée supérieure à 3% et inférieure à 8% poids.

Dans le cas ou ledit catalyseur est sous forme massique, il est obtenu à partir de toutes méthodes de synthèse connues de l'homme du métier telles que la sulfuration directe des précurseurs oxydes et la décomposition thermique de thiosel métallique.

L'utilisation d'un tel catalyseur préféré permet l'obtention d'une sélectivité très élevée pour les réactions d'hydrodésoxygénation et permet de limiter les réactions de décarboxylation / décarbonylation et ainsi de limiter les inconvénients engendrés par la formation d'oxydes de carbone.

La réaction d'hydrodésoxygénation conduit à la formation d'eau par consommation d'hydrogène et à la formation d'hydrocarbures de nombre de carbone égal à celui des chaînes d'acides gras initial. L'effluent issu de l'hydrodésoxygénation comporte des composés hydrocarbures pairs, tels que les hydrocarbures C14 à C24 et sont largement majoritaires par rapport aux composés hydrocarbures impairs, tels que C15 à C23, obtenu par les réactions de décarbonylation/décarboxylation.

La sélectivité pour la voie hydrodésoxygénation est mise en évidence et est définie par la mesure du rapport du nombre de mole de paraffines paires dans la coupe 150°C+ sur le nombre de mole totale de paraffines dans la coupe 150°C+.

Sélectivité HDO (%) = 100 x (nombre de mole de paraffines paires dans la coupe 150°C+) / [nombre de mole de paraffines paires dans la coupe 150°C+ + nombre de mole de paraffines impaires dans la coupe 150°C+]

Les nombres de mole de paraffines paires dans la coupe 150°C+ et le nombre de mole de paraffines impaires dans la coupe 150°C+ permettant d'accéder à la sélectivité pour la voie hydrodésoxygénation sont obtenus par analyse chromatographique en phase gazeuse des effluents liquides de réaction valorisable en carburant. La technique de mesure par analyse chromatographique en phase gazeuse est une méthode connue de l'homme du métier. Dans la première zone catalytique de l'étape a) d'hydrotraitement du procédé selon l'invention, la sélectivité pour la voie hydrodésoxygénation est avantageusement supérieure à 80%.

Ainsi, la sélectivité pour la voie décarboxylation / décarbonylation qui est mise en évidence est définie par la mesure du rapport du nombre de mole de paraffines impaires dans la coupe 150°C+ sur le nombre de mole totale de paraffines dans la coupe 150°C+ soit : Sélectivité DCO (%) = 100 x (nombre de mole de paraffines impaires dans la coupe 150°C+) / [nombre de mole de paraffines paires dans la coupe 150°C+ + nombre de mole de paraffines impaires dans la coupe 150°C+] est avantageusement inférieur à 20%.

Dans le mode de réalisation préféré ou le catalyseur utilisé dans la première zone catalytique de l'étape a) du procédé selon l'invention est un catalyseur massique ou supporté comprenant une phase active constituée d'au moins un élément du groupe VIB et d'au moins un élément du groupe VIII, lesdits éléments étant sous forme sulfure et le rapport atomique du métal (ou métaux) du groupe VIII sur métal (ou métaux) du groupe VIB, étant strictement supérieur à 0 et inférieur à 0,095, la sélectivité pour la voie hydrodésoxygénation est avantageusement supérieure à 90% et dé préférence supérieure à 95%.

Ainsi, dans ce cas, la sélectivité pour la voie décarboxylation / décarbonylation avantageusement inférieur à 10% et de préférence inférieure à 5%.

Les réactions dans la première zone catalytique de l'étape d'hydrotraitement a) sont avantageusement mises en oeuvre à une pression comprise entre 1 MPa et 10 MPa, de manière préférée entre 3 MPa et 10 MPa et de manière encore plus préférée entre 3 MPa et 6 MPa, à une vitesse spatiale horaire comprise entre 0,1 h-1 et 10 h-1 et de préférence entre 0,2 et 5 h-1. Le flux entrant dans la première zone catalytique, comprenant ladite charge en mélange avec au moins une partie d'un effluent liquide hydrotraité issu de l'étape b), et un gaz riche en hydrogène est mise au contact du catalyseur en présence d'hydrogène. La quantité d'hydrogène mélangé à la charge ou à l'effluent hydrotraité ou au mélange des deux à l'entrée de la première zone catalytique est telle que le ratio hydrogène/charge est compris entre 200 et 2000 Nm3 d'hydrogène/m3 de charge, de manière préférée compris entre 200 et 1800 et de manière très préférée entre 500 et 1600 Nm3 d'hydrogène/m3 de charge.

Les charges issues de sources renouvelables comportent généralement également différentes impuretés et notamment des hétéroatomes tels que l'azote. Les teneurs en azote rencontrées comprises entre 1 et 100 ppm poids pour les huiles végétales, mais peuvent atteindre 1% poids sur des charges particulières telles que certaines graisses animales.

Or, l'azote est un poison des catalyseurs d'hydroisomérisation éventuellement mis en oeuvre en aval du procédé de traitement selon l'invention dans le but d'obtenir une base gazole de bonne qualité et/ou une coupe kérosène aux spécifications.

Une des façons d'enlever l'azote est de mettre en oeuvre une réaction d'hydrodéazotation pour transformer les molécules azotées en ammoniac facilement éliminable.

Le niveau de température atteint après la saturation des doubles liaisons et la désoxygénation, qui a été volontairement limité comme expliqué ci dessus, n'est pas suffisant pour permettre l'hydrodéazotation.

De plus, l'hydrodéazotation est une réaction caractérisée par une cinétique relativement lente, ce qui nécessite des niveaux de température élevés pour atteindre une conversion quasi-totale, pour des temps de séjours raisonnables, et donc des conditions plus sévères que l'hydrodeoxygenation et la décarboxylation/décarbonylation.

Le niveau de température nécessaire à l'hydrodéazotation est apportée, selon l'invention, en injectant au moins une partie d'un effluent liquide hydrotraité, préalablement préchauffé à travers au moins un échangeur et/ou à travers au moins un four ou tout autre méthode de chauffage connu de l'homme du métier telle que par exemple les mico-ondes, dans la ou les zones catalytiques suivants la première.

Conformément au procédé selon l'invention, l'effluent issu de la première zone catalytique est ensuite introduit, en mélange avec au moins une partie d'un effluent liquide hydrotraité issu de l'étape b) et préchauffé, dans la ou les zones catalytiques suivantes et de préférence dans la zone catalytique suivante appelée deuxième zone catalytique, à une température comprise entre 260 et 320 °C, de manière préférée à une température comprise entre 280 et 320°C et de manière encore plus préférée à une température supérieure à 300°C, selon l'étape a) d'hydrotraitement.

Au moins une partie de l'effluent liquide hydrotraité issu de l'étape b) est donc préalablement pré-chauffé par passage éventuel dans au moins un échangeur et/ou au moins un four ou tout autre moyen de chauffage connu de l'homme du métier, avant d'être recyclé en tête de chaque zone catalytique de l'étape a) d'hydrotraitement suivant la première zone catalytique, de manière à ajuster la température dudit effluent liquide hydrotraité et recyclé et à amener le mélange de l'effluent issu de la première zone catalytique avec au moins une partie dudit effluent liquide hydrotraité aux conditions de température favorisant la réaction d'hydrodéazotation.

La mise en oeuvre du recycle d'au moins une partie de l'effluent liquide hydrotraité, préalablement pré-chauffé, en tête de chaque zone catalytique de l'étape a) d'hydrotraitement suivant la première zone catalytique, permet donc de chauffer de manière indirecte l'effluent issu de la première zone catalytique et d'ajuster la température d'entrée des zones catalytiques suivantes à une température comprise entre 260 et 320 °C, de manière à se placer dans des conditions de températures favorables à la réaction d'hydrodéazotation et à réaliser la désoxygénation de l'effluent partiellement désoxygéné.

Un autre flux de chauffage est avantageusement constitué d'un effluent gazeux riche en hydrogène provenant de l'appoint en hydrogène et/ou de l'effluent gazeux issu de l'étape b) de séparation. Au moins une partie de cet effluent gazeux riche en hydrogène provenant de l'appoint en hydrogène et/ou de l'effluent gazeux issu de l'étape b) de séparation est avantageusement injecté en mélange avec au moins une partie de l'effluent liquide hydrotraité issu de l'étape b) ou séparément, en tête de chaque zone catalytique de l'étape a) suivant la première zone catalytique et de préférence en tête de la deuxième zone catalytique. Le flux gazeux riche en hydrogène peut donc être avantageusement soit pré-chauffé en mélange avec au moins une partie de l'effluent liquide hydrotraité soit pré-chauffé séparément avant mélange de préférence par passage éventuel dans au moins un échangeur et/ou au moins un four ou tout autre moyen de chauffage connu de l'homme du métier.

Grâce aux différents flux de chauffage, les conditions de température utilisées dans les zones catalytiques suivants la première sont plus favorables à la cinétique d'hydrodéazotation que les conditions de température utilisées dans la première zone catalytique et permettent également de réaliser en majorité les réactions de désoxygénation.

Le taux de desoxygénation est suivi par la mesure de la concentration en oxygène par analyse élémentaire.

Dans la ou les zones catalytiques suivant la première zone catalytique, les conditions opératoires utilisées permettent d'atteindre un taux de desoxygénation supérieur à 60% et de préférence supérieur à 90%, soit un taux de desoxygenation global (par HDO et DCO confondue) sur l'ensemble des zones visé entre 80 et 100% et de préférence entre 95 et 100%, et permettent d'atteindre à l'issue de la ou les zones catalytiques suivant la première zone catalytique et de préférence de la deuxième zone catalytique, une teneur en azote dans l'effluent hydrotraité inférieur à 5 ppm, de préférence inférieure à 2 ppm et de manière très préférée, inférieure à 1 ppm, la teneur en azote étant mesurée selon la norme ASTM D4629-2002.

Conformément à l'invention, le catalyseur d'hydrotraitement utilisé dans la ou les zones catalytiques suivants la première zone catalytique de l'étape a) d'hydrotraitement du procédé selon l'invention et de préférence la deuxième zone catalytique est un catalyseur massique ou supporté comprenant une phase active constituée d'au moins un élément du groupe VIB et d'au moins un élément du groupe VIII, lesdits éléments étant sous forme sulfure et le rapport atomique du métal (ou métaux) du groupe VIII sur métal (ou métaux) du groupe VIB, étant strictement supérieur à 0 et inférieur à 0,095.

On appelle phase active, la phase contenant le ou les éléments sous forme sulfure des groupes des métaux, en l'occurrence la phase active du catalyseur utilisée dans la première étape d'hydrotraitement a) est constituée d'au moins un élément sulfuré du groupe VIB et d'au moins un élément sulfuré du groupe VIII.

Conformément à la présente invention, le catalyseur mis en oeuvre dans la deuxième zone catalytique de l'étape a) d'hydrotraitement du procédé selon l'invention peut être supporté. Il comporte avantageusement un support minéral amorphe de préférence choisi dans le groupe formé par l'alumine, la silice, les silices-alumines, la magnésie, les argiles et les mélanges d'au moins deux de ces minéraux et de préférence ledit support est l'alumine. Ledit support peut également avantageusement renfermer d'autres composés tels que par exemple des oxydes choisis dans le groupe formé par l'oxyde de bore, la zircone et l'oxyde de titane.

De manière préférée, le support minérale amorphe est constitué uniquement d'alumine et de manière très préférée uniquement d'alumine η, δ ou γ. Ainsi, dans ce mode de réalisation préféré, ledit support ne contient aucun autre composé et est constitué à 100% d'alumine. Conformément au procédé selon l'invention, la phase active dudit catalyseur sous forme supporté ou massique est constituée d'au moins un élément du groupe VIB et d'au moins un élément du groupe VIII, ledit élément du groupe VIB étant choisi parmi le molybdène et le tungstène et de préférence, ledit élément du groupe VIB est le molybdène et ledit élément du groupe VIII est choisi parmi le nickel et le cobalt et de préférence ledit élément du groupe VIII est le nickel.

Conformément au procédé selon l'invention, le rapport atomique du métal (ou métaux) du groupe VIII sur métal (ou métaux) du groupe VIB, étant strictement supérieur à 0 et inférieur à 0,095, de préférence compris entre 0,01 et 0,08, de manière préférée entre 0,01 et 0,05 et de manière très préférée entre 0,01 et 0,03.

De préférence, le métal du groupe VIB est le molybdène et le métal du groupe VIII est le nickel et le rapport atomique du métal du groupe VIII sur métal du groupe VIB, c'est à dire le rapport atomique Ni/Mo, est strictement supérieur à 0 et inférieur à 0,095, de préférence compris entre 0,01 et 0,08, de manière préférée entre 0,01 et 0,05 et de manière très préférée entre 0,01 et 0,03.

Dans le cas où ledit catalyseur est sous forme supportée, la teneur en oxyde d'élément du groupe VIB est avantageusement comprise entre 1 % et 30 % poids par rapport à la masse totale du catalyseur, de préférence comprise entre 10 et 25 % poids, de manière très préférée entre 15 % et 25 % poids et de manière encore plus préférée entre 17 et 23% poids et la teneur en oxyde d'élément du groupe VIII est avantageusement strictement supérieure à 0 % et inférieure à 1,5 % poids par rapport à la masse totale du catalyseur, de préférence comprise entre 0,05 % et 1,1 % poids, de manière très préférée entre 0,07 % et 0,65 % poids et de manière encore plus préférée entre 0,08 et 0,36% poids.

La valeur minimale du rapport atomique Ni/Mo égal à 0,01, pour une teneur en oxyde de molybdène de 1% poids, dans le cadre de l'invention, correspond à une teneur en nickel de 50 ppm poids, détectable par les techniques usuelles d'analyse élémentaire par ICP (Inductively coupled plasma ou selon la terminologie française par plasma inductif), ladite limite de détection du nickel étant de l'ordre du ppm.

Dans le cas où ledit catalyseur est sous forme massique, les teneurs en oxyde des éléments des groupes VIB et VIII sont définies par les rapports atomiques du métal (ou métaux) du groupe VIII sur métal (ou métaux) du groupe VIB définis selon l'invention.

Pour un rapport atomique du métal (ou métaux) du groupe VIII sur métal (ou métaux) du groupe VIB strictement supérieur à 0 et inférieur à 0,095, la teneur en élément du groupe VIB est avantageusement supérieure à 95,3% et strictement inférieure à 100% poids en équivalent oxyde de l'élément du groupe VIB et la teneur en élément du groupe VIII est avantageusement strictement supérieur à 0 et inférieure à 4,7% poids en équivalent oxyde de l'élément du groupe VIII.

Pour un rapport atomique du métal (ou métaux) du groupe VIII sur métal (ou métaux) du groupe VIB compris entre 0,01 et 0,08, la teneur en élément du groupe VIB est avantageusement comprise entre 96 et 99,4% poids en équivalent oxyde de l'élément du groupe VIB et la teneur en élément du groupe VIII est avantageusement comprise entre 0,6 et 4% poids en équivalent oxyde de l'élément du groupe VIII.

Pour un rapport atomique du métal (ou métaux) du groupe VIII sur métal (ou métaux) du groupe VIB compris entre 0,01 et 0,05, la teneur en élément du groupe VIB est avantageusement comprise entre 97,4 et 99,4% poids en équivalent oxyde de l'élément du groupe VIB et la teneur en élément du groupe VIII est avantageusement comprise entre 0,6 et 2,6% poids en équivalent oxyde de l'élément du groupe VIII.

Pour un rapport atomique du métal (ou métaux) du groupe VIII sur métal (ou métaux) du groupe VIB compris entre 0,01 et 0,03, la teneur en élément du groupe VIB est avantageusement comprise entre 98,4 et 99,4% poids en équivalent oxyde de l'élément du groupe VIB et la teneur en élément du groupe VIII est avantageusement comprise entre 0,6 et 1,6% poids en équivalent oxyde de l'élément du groupe VIII.

De préférence, et dans le cas ou ledit catalyseur est sous forme supporté, ledit catalyseur comprend également au moins un élément dopant choisis parmi le phosphore, le fluor, le silicium et le bore et de préférence, l'élément dopant est le phosphore, afin d'atteindre un niveau de conversion élevé tout en maintenant une sélectivité de réaction pour la voie d'hydrodésoxygénation. De préférence, et dans le cas ou ledit catalyseur est sous forme supporté, ledit élément dopant est avantageusement déposé sur le support. On peut également avantageusement déposer du silicium sur le support, seul ou avec le phosphore et/ou le bore et/ou le fluor.

Il est connu de l'homme de l'art que ces éléments ont des effets indirect sur l'activité catalytique : une meilleure dispersion de la phase active sulfurée et une augmentation de l'acidité du catalyseur favorable aux réactions d'hydrotraitement (Sun et al, Catalysis Today 86(2003) 173).

Dans le cas ou ledit catalyseur est sous forme supportée, la teneur en élément dopant, ledit élément dopant étant de préférence le phosphore, est avantageusement strictement supérieure à 0,5% et inférieure à 8 % poids d'oxyde P₂O₅ par rapport à la masse totale du catalyseur et de préférence supérieure à 1% et inférieure à 8% et de manière très préférée supérieure à 3% et inférieure à 8% poids.

Dans le cas de l'utilisation de catalyseur supporté, la fonction hydrogénante peut être introduite sur ledit catalyseur par toute méthode connue de l'homme du métier comme par exemple le comalaxage, l'imprégnation à sec etc....

Conformément à la présente invention, ledit catalyseur peut alternativement être massique, dans ce cas, ledit catalyseur ne contient pas de support.

Le catalyseur utilisé dans la deuxième zone catalytique du procédé selon l'invention, dans le cas ou ledit catalyseur est sous forme massique, peut également avantageusement contenir au moins un élément dopant choisis parmi le phosphore, le fluor, le silicium et le bore et de préférence, l'élément dopant est le phosphore, afin d'atteindre un niveau de conversion élevé tout en maintenant une sélectivité de réaction pour la voie d'hydrodésoxygénation.

Dans le cas ou ledit catalyseur est sous forme massique, ledit élément dopant est avantageusement déposé sur la phase active.

Dans le cas ou ledit catalyseur est sous forme massique, la teneur en élément dopant, ledit élément dopant étant de préférence le phosphore, est avantageusement strictement supérieure à 0,5% et inférieure à 8 % poids d'oxyde P₂O₅ par rapport à la masse totale du catalyseur et de préférence supérieure à 1% et inférieure à 8% et de manière très préférée supérieure à 3% et inférieure à 8% poids.

Dans le cas ou ledit catalyseur est sous forme massique, il est obtenu à partir de toutes méthodes de synthèse connues de l'homme du métier telles que la sulfuration directe des précurseurs oxydes et la décomposition thermique de thiosel métallique.

Le catalyseur mis en oeuvre dans la deuxième zone catalytique de l'étape a) d'hydrotraitement du procédé selon l'invention peut avantageusement être identique ou différent de celui utilisé dans la première zone catalytique de l'étape a) et de préférence identique.

L'utilisation d'un tel catalyseur préféré permet l'obtention dans la deuxième zone catalytique de l'étape a) d'hydrotraitement du procédé selon l'invention d'une sélectivité très élevée pour les réactions d'hydrodésoxygénation et permet de limiter les réactions de décarboxylation / décarbonylation et ainsi de limiter les inconvénients engendrés par la formation d'oxydes de carbone.

Dans la deuxième zone catalytique de l'étape a) d'hydrotraitement du procédé selon l'invention, la sélectivité pour la voie hydrodésoxygénation est avantageusement supérieure à 90% et de préférence supérieure à 95%.

Ainsi, dans ce cas, la sélectivité pour la voie décarboxylation / décarbonylation avantageusement inférieur à 10% et de préférence inférieure à 5%.

Selon l'invention, les métaux des catalyseurs utilisés dans la deuxième zone catalytique de l'étape a) du procédé selon l'invention sont des métaux sulfurés, les méthodes de sulfuration sont les méthodes classiques, connues de l'homme du métier.

Les réactions dans la ou les zones catalytiques suivants la première zone catalytique sont avantageusement mises en oeuvre à une pression comprise entre 1 MPa et 10 MPa, de manière préférée entre 3 MPa et 10 MPa et de manière encore plus préférée entre 3 MPa et 6 MPa, à une vitesse spatiale horaire comprise entre 0,1 h-¹ et 10 h-¹ et de préférence entre 0,2 et 5 h-¹. La quantité totale d'hydrogène mélangée à l'entrée de la deuxième zone catalytique à l'effluent de la première zone ou à la partie de l'effluent liquide hydrotraité ou au mélange des deux est telle que le ratio hydrogène/hydrocarbures entrant dans la ou les zones catalytiques suivants la première est compris entre 200 et 2000 Nm3 d'hydrogène/m3 de charge, de manière préférée compris entre 200 et 1800 et de manière très préférée entre 500 et 1600 Nm3 d'hydrogène/m3 de charge.. Pour atteindre ces conditions un flux de gaz riche en hydrogène est mélangé au flux en amont de la deuxième zone catalytique. Le flux de gaz riche en hydrogène peut avantageusement venir d'un appoint d'hydrogène et/ou du recyclage de l'effluent gazeux issu de l'étape b) de séparation, l'effluent gazeux contenant un gaz riche en hydrogène ayant préalablement subi un ou plusieurs traitements de purification intermédiaire avant d'être recyclé et mélangé.

Par ailleurs, la minimisation des flux à l'entrée de la ou les zones catalytiques suivants la première limite la dilution des composés azotés. La minimisation du recyclage liquide est donc favorable à la cinétique d'hydrodéazotation puisque celle ci est fonction de la concentration en composés azotés. Il y a donc un intérêt à minimiser le recycle de liquide hydrotraité.

On définit le taux de recycle global du procédé selon l'invention par le rapport du débit massique de produit hydrotraité récyclé total en kilogramme sur le débit massique de charge fraîche en kilogrammes.

Le taux de recycle global du procédé selon l'invention est avantageusement compris entre 1 et 5 et de préférence entre 0,5 et 4, de manière préférée entre 0,5 et 3 et de manière très préférée, strictement inférieur à 3.

L'utilisation de taux de recycle globaux faibles est permise grâce à une utilisation avantageuse des chaleurs de réactions, associée à une température en entrée de chaque zone catalytique la plus faible possible. La minimisation du débit hydraulique dans la première zone catalytique conduit à des coûts d'investissements et des coûts opératoires significativement réduits.

Par ailleurs, la minimisation du taux de recycle dans l'unité conduisant à une dilution des composés azotés plus faible, associée à une température élevée permise grâce à l'apport de flux chaud en entrée de la deuxième zone catalytique, conduit à une cinétique d'hydrodéazotation plus élevée et permet donc une quantité de catalyseur optimisée:
Le contrôle de la température et du débit de recyclage de liquide chaud ou très chaud en entrée de chaque zone catalytique permet d'assurer la flexibilité du procédé en apportant la chaleur nécessaire au démarrage des réactions tout en contrôlant l'élévation de température.
En effet, une partie de l'énergie dégagée par les réactions mises en oeuvre servira à chauffer à la fois la charge et le recycle. Il en résulte une élévation de température plus faible. Le contrôle de l'élévation de température du milieu réactionnel permet d'agir sur la cinétique des réactions elles-mêmes exothermiques. Cela permet de limiter les risques d'emballement pour une opération en toute sécurité et permet d'obtenir la conversion souhaitée dans chaque zone catalytique.

De préférence, les différentes zones catalytiques de l'étape a) d'hydrotraitement se situent dans un seul ou plusieurs réacteurs et de manière préférée, dans un seul réacteur.

Dans le cas où elles se situent dans un seul réacteur, les différentes zones catalytiques sont constituées par plusieurs lits catalytiques, éventuellement séparés par des zones de quenchs liquide ou gazeux.

De préférence, l'étape a) comprend deux zones catalytiques se situant dans un seul ou dans deux réacteurs. La première zone catalytique est avantageusement une zone d'hydrogénation dans laquelle la majorité des doubles liaisons sont hydrogénées et la chaleur dégagée par la réaction d'hydrogénation est avantageusement utilisée pour amorcer les réactions de deoxygénation et la deuxième zone catalytique est avantageusement une zone de déoxygénation (décarboxylation et hydrodéoxygénation) et d'hydrodéazotation dans laquelle la majorité des réactions de déoxygénation et d'hydrodéazotation se produit.

### Étape b)

Conformément à l'étape b) du procédé selon l'invention, l'effluent issu de l'étape a) d'hydrotraitement subit une étape permettant la séparation d'un effluent gazeux et d'un effluent liquide hydrotraité dont au moins une partie est recyclé en tête de chaque zone catalytique de l'étape a).

L'effluent gazeux contient majoritairement de l'hydrogène, du monoxyde et dioxyde de carbone, des hydrocarbures légers de 1 à 5 atomes de carbone et de la vapeur d'eau. Le but de cette étape est donc de séparer les gaz du liquide, et notamment, de récupérer les gaz riches en hydrogène et au moins un effluent liquide hydrotraité ayant de manière très préférée, une teneur en azote inférieure à 1 ppm poids.

Au moins une partie de l'effluent gazeux riche en hydrogène issu de l'étape b) de séparation et ayant subi de préférence un traitement de purification visant à déconcentrer les impuretés issues des réactions présentes dans l'effluent gazeux au moment de l'étape b) de séparation, peut avantageusement être injecté soit en mélange avec au moins une partie de l'effluent liquide hydrotraité issu de l'étape b) soit séparément, en tête de chaque zone catalytique de l'étape a).

L'étape de séparation peut avantageusement être mise en oeuvre par toute méthode connue de l'homme du métier telle que par exemple la combinaison de un ou plusieurs séparateurs haute et/ou basse pression, et/ou d'étapes de distillation et/ou de strippage haute et/ou basse pression.

L'effluent liquide hydrotraité est essentiellement constitué de n-paraffines qui peuvent être incorporées au pool gazole et/ou au pool kérosène. De manière à améliorer les propriétés à froid de cet effluent liquide hydrotraité, une étape d'hydroisomérisation est nécessaire pour transformer les n-paraffines en paraffines branchées présentant de meilleures propriétés à froid .

Au moins une partie de l'effluent liquide hydrotraité non recyclé et de préférence la totalité subit ensuite une étape optionnelle d'hydroisomérisation en présence d'un catalyseur d'hydroisomérisation sélective.

L'étape d'hydroisomérisation est avantageusement mise en oeuvre dans un réacteur séparé. Les catalyseurs d'hydroisomérisation utilisés sont avantageusement de type bifonctionnels, c'est-à-dire qu'ils possèdent une fonction hydro/déshydrogénante et une fonction hydroisomérisante.

Le catalyseur d'hydroisomérisation comprend avantageusement au moins un métal du groupe VIII et/ou au moins un métal du groupe VIB en tant que fonction hydrodéshydrogénante et au moins un tamis moléculaire ou un support minéral amorphe en tant que fonction hydroisomérisante.

Le catalyseur d'hydroisomérisation comprend avantageusement soit au moins un métal noble du groupe VIII de préférence choisi parmi le platine ou le palladium, actifs sous leur forme réduite, soit au moins un métal du groupe VIB, de préférence choisi parmi le molybdène ou le tungstène, en combinaison avec au moins un métal non noble du groupe VIII, de préférence choisi parmi le nickel et le cobalt, utilisés de préférence sous leur forme sulfurée.

Dans le cas où le catalyseur d'hydroisomérisation comprend au moins un métal noble du groupe VIII, la teneur totale en métal noble du catalyseur d'hydroisomérisation utilisé dans l'étape c) du procédé selon l'invention, est avantageusement comprise entre 0,01 et 5% en poids par rapport au catalyseur fini, de manière préférée entre 0,1 et 4% en poids et de manière très préférée entre 0,2 et 2% en poids.

De préférence, le catalyseur d'hydroisomérisation comprend le platine ou le palladium et de manière préférée, le catalyseur d'hydroisomérisation comprend le platine.

Dans le cas où le catalyseur d'hydroisomérisation comprend au moins un métal du groupe VIB en combinaison avec au moins un métal non noble du groupe VIII, la teneur en métal du groupe VIB du catalyseur d'hydroisomérisation utilisé dans l'étape c) du procédé selon l'invention, est avantageusement comprise, en équivalent oxyde, entre 5 et 40 % en poids par rapport au catalyseur fini, de manière préférée entre 10 et 35 % en poids et de manière très préférée entre 15 et 30 % en poids et la teneur en métal du groupe VIII dudit catalyseur est avantageusement comprise, en équivalent oxyde, entre 0,5 et 10 % en poids par rapport au catalyseur fini, de manière préférée entre 1 et 8 % en poids et de manière très préférée entre 1,5 et 6% en poids.

La fonction hydro/déshydrogénante métallique peut avantageusement être introduite sur ledit catalyseur par toute méthode connue de l'homme du métier, comme par exemple le comalaxage, l'imprégnation à sec, l'imprégnation par échange.

Selon un mode de réalisation préféré, ledit catalyseur d'hydroisomérisation comprend au moins un support minéral amorphe en tant que fonction hydroisomérisante, ledit un support minéral amorphe étant choisi parmi les silice-alumines et alumines silicées et de manière préférée les silice alumines.

Un catalyseur d'hydroisomérisation préféré comprend une phase active à base de nickel et de tungstène et un support minéral amorphe silice alumines, ledit catalyseur étant de préférence sous forme sulfure.

Selon un autre mode de réalisation préféré, ledit catalyseur d'hydroisomérisation comprend au moins un tamis moléculaire, de préférence au moins un tamis moléculaire zéolithique et de manière plus préférée, au moins un tamis moléculaire zéolithique 10 MR monodimensionnel en tant que fonction hydroisomérisante.

Les tamis moléculaires zéolithiques sont définis dans la classification "Atlas of Zeolite Structure Types", W. M Meier, D. H. Olson and Ch. Baerlocher, 5th revised édition, 2001, Elsevier auquel se réfère également la présente demande. Les zéolithes y sont classées selon la taille de leurs ouvertures de pores ou canaux.

Les tamis moléculaires zéolithiques 10 MR monodimensionnel présentent des pores ou canaux dont l'ouverture est définie par un anneau à 10 atomes d'oxygène (ouverture à 10 MR). Les canaux du tamis moléculaire zéolithique ayant une ouverture à 10 MR sont avantageusement des canaux monodimensionnels non interconnectés qui débouchent directement sur l'extérieur de ladite zéolithe. Les tamis moléculaires zéolithiques 10 MR monodimensionnels présents dans ledit catalyseur d'hydroisomérisation comprennent avantageusement du silicium et au moins un élément T choisi dans le groupe formé par l'aluminium, le fer, le gallium, le phosphore et le bore, de préférence l'aluminium. Les rapports Si/Al des zéolithes décrites ci-dessus sont avantageusement ceux obtenus à la synthèse ou bien obtenus après des traitements de désalumination post-synthèse bien connus de l'homme de l'art, tels que et à titre non exhaustif les traitements hydrothermiques suivis ou non d'attaques acides ou bien encore les attaques acides directes par des solutions d'acides minéraux ou organiques. Elles sont, de préférence, pratiquement totalement, sous forme acide, c'est-à-dire que le rapport atomique entre le cation de compensation monovalent (par exemple le sodium) et l'élément T inséré dans le réseau cristallin du solide est avantageusement inférieur à 0,1, de préférence inférieur à 0,05 et de manière très préférée inférieur à 0,01. Ainsi, les zéolithes entrant dans la composition dudit catalyseur sélectif d'hydroisomérisation sont avantageusement calcinées et échangées par au moins un traitement par une solution d'au moins un sel d'ammonium de manière à obtenir la forme ammonium des zéolithes qui une fois calcinée conduisent à la forme acide desdites zéolithes.

Ledit tamis moléculaire zéolithique 10 MR monodimensionnel dudit catalyseur d'hydroisomérisation est avantageusement choisi parmi les tamis moléculaires zéolithiques de type structural TON, tel que la NU-10 ,FER, tel que la ferrierite, EUO, choisis parmi la EU-1 et la ZSM-50, prises seules ou en mélange, ou les tamis moléculaires zéolithiques ZSM-48, ZBM-30, IZM-1, COK-7, EU-2 et EU-11, pris seul ou en mélange.

De manière préférée, ledit tamis moléculaire zéolithique 10 MR monodimensionnel est choisi parmi les tamis moléculaires zéolithiques ZSM-48, ZBM-30, IZM-1 et COK-7, pris seul ou en mélange. De manière encore plus préférée, ledit tamis moléculaire zéolithique 10 MR monodimensionnel est choisi parmi les tamis moléculaires zéolithiques ZSM-48 et ZBM-30, pris seul ou en mélange.

De manière très préférée, ledit tamis moléculaire zéolithique 10 MR monodimensionnel est la ZBM-30 et de manière encore plus préférée, ledit tamis moléculaire zéolithique 10 MR monodimensionnel est la ZBM-30 synthétisée avec le structurant organique triéthylènetétramine.

La zéolithe ZBM-30 est décrite dans le brevet EP-A-46 504, et la zéolithe COK-7 est décrite dans les demandes de brevet EP 1 702 888 A1 ou FR 2 882 744 A1.

La zéolithe IZM-1 est décrite dans la demande de brevet FR-A-2 911 866 et la zéolithe ZSM 48 est décrite dans Schlenker, J.L. Rohrbaugh, W.J., Chu, P., Valyocsik, E.W. and Kokotailo, G.T. Title: The framewrok topolgy of ZSM-48: a high silica zeolite Reference: Zeolites, 5, 355-358 (1985) Material *ZSM-48".

Les zéolithes de type structural TON sont décrites dans l'ouvrage "Atlas of Zeolithe Structure Types", W.M. Meier, D.H. Olson and Ch. Baerlocher, 5th Revised edition, 2001, Elsevier.

La zéolithe de type structural TON est décrite dans l'ouvrage "Atlas of Zeolithe Structure Types", ci-dessus cité et en ce qui concerne la zéolithe NU-10, dans les brevets EP-65400 et EP-77624.

La zéolithe de type structural FER est décrite dans l'ouvrage "Atlas of Zeolithe Structure Types", ci-dessus cité.

La teneur en tamis moléculaire zéolithique 10 MR monodimensionnel est avantageusement comprise entre 5 et 95% poids, de préférence entre 10 et 90% poids, de manière plus préférée entre 15 et 85% poids et de manière très préférée entre 20 et 80% poids par rapport au catalyseur fini.

De préférence, ledit catalyseur d'hydroisomérisation comprend également un liant constitué d'une matrice minérale poreuse. Ledit liant peut avantageusement être utilisé durant l'étape de mise en forme dudit catalyseur d'hydroisomérisation.

De préférence, la mise en forme est réalisée avec un liant constitué d'une matrice contenant de l'alumine, sous toutes ses formes connues de l'homme du métier, et de manière très préférée avec une matrice contenant de l'alumine gamma.

Les catalyseurs d'hydroisomérisation obtenus sont mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudres concassées, de tablettes, d'anneaux, de billes, de roues. D'autres techniques que l'extrusion, telles que le pastillage ou la dragéification, peuvent avantageusement être utilisées.

Dans le cas où le catalyseur d'hydroisomérisation contient au moins un métal noble, le métal noble contenu dans ledit catalyseur d'hydroisomérisation doit avantageusement être réduit. Une des méthodes préférées pour conduire la réduction du métal est le traitement sous hydrogène à une température comprise entre 150°C et 650°C et une pression totale comprise entre 1 et 250 bar. Par exemple, une réduction consiste en un palier à 150°C de deux heures puis une montée en température jusqu'à 450°C à la vitesse de 1 °C/min puis un palier de deux heures à 450°C; durant toute cette étape de réduction, le débit d'hydrogène est de 1000 normaux m³ hydrogène / m³ catalyseur et la pression totale maintenue constante à 1 bar. Toute méthode de réduction ex-situ peut avantageusement être envisagée.

Dans la zone d'hydroisomérisation, la charge est mise en contact, en présence d'hydrogène avec ledit catalyseur d'hydroisomérisation, à des températures et des pressions opératoires permettant avantageusement de réaliser une hydroisomérisation de la charge non convertissante. Cela signifie que l'hydroisomérisation s'effectue avec une conversion de la fraction 150°C+ en fraction 150°C- inférieure à 20% en poids, de manière préférée inférieure à 10% en poids et de manière très préférée inférieure à 5% en poids.

Ainsi, l'étape optionnelle d'hydroisomérisation opère à une température comprise entre 150 et 500°C, de préférence entre 150°C et 450°C, et de manière très préférée, entre 200 et 450°C, à une pression comprise entre 1 MPa et 10 MPa, de préférence entre 2 MPa et 10 MPa et de manière très préférée, entre 1 MPa et 9 MPa, à une vitesse volumique horaire avantageusement comprise entre 0,1 h-¹ et 10 h-¹, de préférence entre 0,2 et 7 h-¹ et de manière très préférée, entre 0,5 et 5 h-¹, à un débit d'hydrogène tel que le rapport volumique hydrogène/hydrocarbures est avantageusement compris entre 70 et 1000 Nm³/m³ de charge, entre 100 et 1000 normaux m³ d'hydrogène par m³ de charge et de manière préférée entre 150 et 1000 normaux m³ d'hydrogène par m³ de charge.

De manière préférée, l'étape d'hydroisomérisation éventuelle opère à co-courant.

L'effluent hydroisomérisé est ensuite avantaguesement soumis au moins en partie, et de préférence en totalité, à une ou plusieurs séparations. Le but de cette étape est de séparer les gaz du liquide, et notamment, de récupérer les gaz riches en hydrogène pouvant contenir également des légers tels que la coupe C₁ - C₄ , au moins une coupe gazole (coupe 250°C+) et kérosène (coupe 150-250°C) de bonne qualité et une coupe naphta. La valorisation de la coupe naphta n'est pas l'objet de la présente invention, mais cette coupe peut avantageusement être envoyée dans une unité de vapocraquage ou de reformage catalytique.

Les produits, base gazole et kérosène, obtenus selon le procédé selon l'invention et en particulier après hydroisomérisation sont dotés d'excellentes caractéristiques.

La base gazole obtenu, après mélange avec un gazole pétrolier issu de charge renouvelable telles que le charbon ou la biomasse lignocellulosique, et/ou avec un additif, est d'excellente qualité:
- sa teneur en soufre est inférieure à 10 ppm poids.
- sa teneur en aromatiques totaux est inférieure à 5% poids, et la teneur en polyaromatiques inférieure à 2% poids.
- l'indice de cétane est excellent, supérieur à 55.
- la densité est inférieure à 840 kg/m3, et le plus souvent supérieure à 820 kg/m3.
- Sa viscosité cinématique à 40°C est 2 à 8 mm2/s.
- ses propriétés de tenue à froid sont compatibles avec les normes en vigueur, avec une température limite de filtrabilité inférieure à -15°C et un point de trouble inférieur à -5°C.

La coupe kérosène obtenue , après mélange avec un kérosène pétrolier issu de charge renouvelable telles que le charbon ou la biomasse lignocellulosique et/ou avec un additif présente les caractéristiques suivantes :
- une densité comprise entre 775 et 840 kg/m3
- une viscosité à -20°C inférieure à 8 mm2/s
- un point de disparition de cristaux inférieur à -47°C
- un point éclair supérieur à 38°C
- un point de fumée supérieur à 25 mm.

### Description des figures

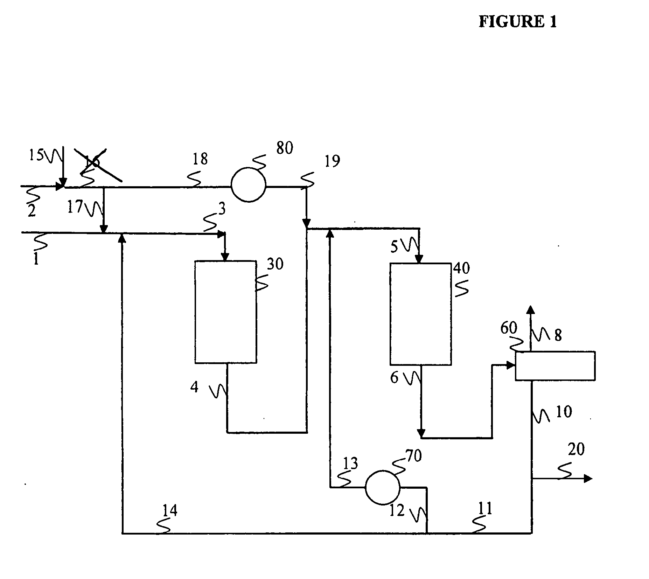

La figure 1 illustre un mode de réalisation préféré du procédé selon l'invention, non limitatif, dans lequel l'étape a) comprend deux zones catalytiques se situant dans deux réacteurs.

La charge fraîche (1) est introduite en mélange avec une partie de l'effluent liquide hydrotraité (14) issu de la zone de séparation (60) via la conduite (3). Du gaz riche en hydrogène est mélangé via la conduite (17) à la charge fraîche. Le gaz riche en hydrogène (17) vient d'un appoint d'hydrogène (2) et de l'effluent gazeux issu de la zone de séparation (60) via la conduite (8), l'effluent gazeux ayant préalablement subi un ou plusieurs traitements de purification intermédiaire avant d'être mélangé à la charge fraîche et recyclé via la conduite (15).

En amont de la première zone catalytique (30), la charge fraîche, mélangée à un flux gazeux riche en hydrogène est également mélangée via la conduite (14) avec au moins une partie de l'effluent hydrotraité issu du séparateur (60) via la conduite (11) de manière à obtenir la température visée à l'entrée de la première zone catalytique (30).

L'effluent (4) issu de la première zone catalytique (30) est ensuite mélangé à un gaz riche en hydrogène via la conduite (19) et à au moins une partie de l'effluent liquide hydrotraité via la conduite (13). Le gaz riche en hydrogène (19) est obtenu en chauffant le flux (18) provenant d'un appoint en hydrogène dans un four (80). L'effluent hydrotraité (13) est obtenu en chauffant le flux (12) issu du séparateur (60) dans un four (70) pour ajuster la température du mélange dans la conduite (5) en entrée de la deuxième zone catalytique (40).

L'effluent issu de la deuxième zone catalytique (40) via la conduite (6) subit ensuite une étape de séparation dans le séparateur (60) afin d'obtenir une un effluent liquide hydrotraité (10) et un effluent gazeux (8). L'effluent gazeux (8) est un gaz riche en hydrogène dont une partie est traitée avant d'être recyclé en amont des deux zones catalytiques (30) et (40). Le flux (10) est constitué majoritairement de produit hydrotraité qui est divisé en deux flux, le flux (11) qui est recyclé en amont des deux zones catalytiques après avoir été éventuellement préchauffé ou pas et le flux (20) qui est envoyé directement dans une unité d'hydroisomérisation non représentée sur la figure 1.

L'exemple qui suit illustre l'invention sans toutefois en limiter sa portée.

### Exemple :

L'huile de Soja est constituée majoritairement de triglycérides dont chaque molécule comporte en moyenne environ 4,7 doubles liaisons. Ce chiffre est une moyenne du nombre d'insaturations présentes par molécule de triglycérides et obtenue à partir de la composition typique en acides gras de l'huile. Ce chiffre est défini comme le ratio entre le nombre total d'insaturations et le nombre de molécules de triglycérides.

L'huile de Palme est constituée majoritairement de triglycérides dont chaque molécule comporte en moyenne environ 2,1 doubles liaisons. Cette différence de nombre de doubles liaisons ou d'insaturations se traduit par des chaleurs de réactions très différentes. Ces deux huiles constituent d'excellents exemples pour illustrer la flexibilité thermique du procédé.

Dans un premier réacteur adiabatique, chargé de 31 L d'un catalyseur d'hydrotraitement constituant la première zone catalytique, on introduit 50 L/h d'huile de soja de densité 920 kg/m³ présentant une teneur en azote égale à 23 ppm poids.

Les principales caractéristiques des charges d'huile de soja et huile de palme utilisées dans le procédé selon l'invention sont reportées dans le Tableau 1.

**Tableau 1**

| **Propriétés de la charge** | huile de soja | huile de palme |
|---|---|---|
| *Analyse élémentaire* | | |
| S [ppm pds] | 4 | 3 |
| N [ppm pds] | 23 | 15 |
| P [ppm pds] | 10 | 10 |
| H [%pds] | 11.4 | 11.9 |
| O [%pds] | 11.0 | 11.3 |
| *Composition en acide gras (%)* | | |
| 12 : 0 | 0.10 | 0.25 |
| 14 : 0 | 0.10 | 1.07 |
| 16 : 0 | 10.28 | 44.21 |
| 16 : 1 | | 0.15 |
| 17 : 1 | | |
| 18 : 0 | 3.73 | 4.45 |
| 18 : 1 | 22.98 | 39.89 |
| 18 : 2 | 54.13 | 9.62 |
| 18 : 3 | 8.67 | 0.37 |

| **Propriété effluent hydro traité** | | |
|---|---|---|
| *Analyse élémentaire* | | |
| S [ppm pds] | < 0.3 | < 0.3 |
| N [ppm pds] | < 0.4 | < 0.4 |
| P [ppm pds] | < 1 | <1 |
| O [%pds] | < 0.2 | < 0.2 |

La charge, initialement à température ambiante, est introduite dans ladite première zone catalytique en mélange avec une partie de l'effluent liquide hydrotraité issu de l'étape b) de séparation, ledit effluent ayant une température de sortie de 321°C pour l'huile de soja et une température de 326°C pour l'huile de palme, et d'un gaz riche en hydrogéne, le mélange d'effluent hydrotraité et du gaz riche en hydrogène étant préalablement refroidi dans un échangeur à une température de 230°C dans le cas d'une charge huile de soja et de 260°C dans le cas d'une charge huile de Palme.

1000 Nm³ d'hydrogène/m³ de charge sont introduits dans le premier réacteur en mélange préalable à l'effluent hydrotraité. Le débit de l'effluent hydrotraité introduit dans la première zone catalytique est égal à 125 L/h dans le cas de l'huile de soja et à 50 L/h dans le cas de l'huile de palme.

Ainsi, le flux entrant dans la première zone catalytique, constitué de ladite charge en mélange avec une partie de l'effluent liquide hydrotraité issu de l'étape b) et d'un gaz riche en hydrogène est introduit dans ladite première zone catalytique à une température de 200°C pour l'huile de soja pour l'huile de palme.

Le catalyseur utilisé dans première zone catalytique de l'étape d'hydrotraitement a) est un catalyseur NiMoP/alumine sulfuré comprenant 0,22 % poids de NiO, 21% poids de MoO3 et de 5% poids de P2O5 supporté sur une alumine gamma. Le catalyseur présente un rapport Ni/Mo égal à 0,02.

Les catalyseurs supportés sont préparés par imprégnation à sec des précurseurs oxydes en solution puis sulfurés in-situ, à une température de 350 °C, préalablement au test à l'aide d'une charge gazole de distillation directe additivée de 2 % en poids diméthyldisulfure (DMDS). Après sulfuration in situ dans l'unité sous pression, la charge issue d'une source renouvelable constituée par l'huile de soja ou l'huile de palme décrite dans le tableau 1 est envoyée dans le réacteur.

Afin de maintenir le catalyseur à l'état sulfure, on ajoute à la charge 50 ppm poids de soufre sous forme de DMDS. Dans les conditions de réactions, le DMDS est totalement décomposé pour former du méthane et de l'H2S.

La méthode de préparation des catalyseurs ne limite pas la portée de l'invention.

Dans la première zone catalytique, la pression est maintenue à 5 MPa, la vitesse spatiale horaire est de 1.6 h⁻¹ et la quantité totale d'hydrogène est telle que le ratio hydrogène/charge est de 1000 Nm3/h/m3.

Les conditions opératoires et plus particulièrement la température de 200 °C du flux entrant dans la première zone catalytique permettent d'hydrogéner la majorité des insaturations de la charge à température réduite et la chaleur dégagée par cette réaction permet d'amorcer les réactions de désoxygénation de la charge.

Les réactions d'hydrogénation étant exothermiques, la température de sortie de la première zone catalytique est de 258°C dans le cas de l'huile de soja et de 257°C dans le cas de l'huile de palme.

Les taux d'hydrogénation des insaturations et le taux de désoxygénation des différentes charges dans la première zone catalytique de l'étape a) d'hydrotraitement sont données dans le tableau 1.

L'effluent issu de la première zone catalytique est ensuite envoyé dans une deuxième zone catalytique située dans un deuxième réacteur chargé de 50 L d'un catalyseur d'hydrotraitement décrit ci dessous, en mélange avec de l'effluent hydrotraité issu de l'étape de séparation et le l'hydrogène. 500 Nm³ d'hydrogène/M³ de charge sont introduits dans le deuxième réacteur en mélange préalable à l'effluent hydrotraité. Le débit de l'effluent hydrotraité introduit dans la deuxième zone catalytique est égal à 22.5 L/h dans le cas de l'huile de soja et à 12.5 L/h dans le cas de l'huile de palme.

Le mélange d'effluent hydrotraité et d'hydrogène allant vers la deuxième zone catalytique est préalablement préchauffé dans un four à une température de 427°C dans le cas de l'huile de soja et 429°C dans le cas de l'huile de Palme.

La température du flux entrant dans la deuxième zone catalytique est donc ajustée à 291°C dans le cas de l'huile de soja et 293°C dans le cas de l'huile de palme.

Le catalyseur utilisé dans la deuxième zone catalytique de l'étape d'hydrotraitement a) est identique au catalyseur utilisé dans la première zone catalytique et est un catalyseur NiMoP/alumine sulfuré comprenant 0,22 % poids de NiO, 21% poids de MoO3 et de 5% poids de P2O5 supporté sur une alumine gamma. Le catalyseur présente un rapport Ni/Mo égal à 0,02.

Ledit catalyseur est préparé et sulfuré de la même manière que le catalyseur utilisé dans la première zone catalytique.

Dans la deuxième zone catalytique, la pression est maintenue à 5 MPa, la vitesse spatiale horaire est de 1 h⁻¹ et la quantité totale d'hydrogène est telle que le ratio hydrogène/charge est de 500 Nm3/h/m3.

Les conditions de température utilisées à savoir une température du flux entrant égale à 291°C dans le cas de l'huile de soja et de 293°C dans le cas de l'huile de palme dans la deuxième zone catalytique est favorables à la cinétique d'hydrodéazotation et permettent également de réaliser en majorité les réactions de déoxygénation. La température de sortie de la deuxième zone catalytique de l'effluent hydrotraité est de 321 °C pour l'huile de Soja, et de 326 °C pour l'huile de palme.

Le taux d'hydrogénation des insaturations, le taux de désoxygénation et la teneur en azote de l'effluent issu de la deuxième zone catalytique des différentes charges dans la deuxième zone catalytique sont données dans le tableau 2. A l'issue de l'étape a) d'hydrotraitement, l'hydrogénation des insaturations est totale, et la teneur en azote est inférieure à 0,4 ppm et la teneur en oxygène est inférieure à 0,2 %.

**Tableau 2: conditions opératoires**

| | Soja | Palme |
|---|---|---|
| Pression totale (MPa g) | 5 | 5 |
| H2/HC global (Nm3/m3) | 1500 | 1500 |
| vvh global (h-1) | 0.6 | 0.6 |
| vvh zone 1 (h-1) | 1.6 | 1.6 |
| vvh zone 2 (h-1) | 1 | 1 |
| H2/HC zone 1 (Nm3/m3) | 1000 | 1000 |
| H2/HC zone 2 (Nm3/m3) | 500 | 500 |
| Recycle global | 2,95 | 1,25 |
| T entrée zone 1 (°C) | 200 | 200 |
| T sortie zone 1 (°C) | 258 | 257 |
| Taux d'hydrogénation des insaturations zone 1 (% mol) | 73 | 73 |
| Taux de désoxygénation zone 1 (% mol) | 36 | 35 |
| Sélectivité en HDO zone 1 | 95 | 95 |
| T entrée zone 2 (°C) | 291 | 293 |
| T sortie zone 2 (°C) | 321 | 326 |
| Taux d'hydrogénation des insaturations zone 2 (% mol) | 100 | 100 |
| Taux de désoxygénation zone 2(% mol) | > 97 | > 97 |
| Sélectivité en HDO zone 2 | 95 | 95 |
| teneur en azote zone 2 | <0,4 | <0,4 |

Les effluents hydrotraités sont ensuite caractérisés. Les rendements et les propriétés des différentes coupes sont reportés dans le tableau 3.

**Tableau 3**

| Rendement (%pds/charge fraîche) | Cas de l'huile de Soja | Cas de l'huile de Palme |
|---|---|---|
| Rendement coupe C₁-C₇ [%poids] | 5.1 | 5.2 |
| Rendement coupe 150°C - [%poids] | 0 | 0 |
| Rendement coupe 150°C + (gazole) [%poids] | 85.4 | 84.3 |

L'utilisation de taux de recycle globaux faibles est permise grâce à une utilisation avantageuse des chaleurs de réactions, associée à une température en entrée de chaque zone catalytique la plus faible possible. La minimisation du débit hydraulique dans la première zone catalytique conduit à des coûts d'investissements et des coûts opératoires significativement réduits.

Par ailleurs, la minimisation du taux de recycle dans l'unité conduisant à une dilution des composés azotés plus faible, associée à une température élevée permise grâce à l'apport de flux chaud en entrée de la deuxième zone catalytique, conduit à une cinétique d'hydrodéazotation plus élevée et permet donc une quantité de catalyseur optimisée.

Le schéma proposé constitue donc un procédé d'hydrotraitement d'huiles végétales flexible et économique.

L'effluent issu de l'étape d'hydrotraitement est ensuite séparé au moyen d'un strippage à l'hydrogène, pour récupérer un effluent gazeux et un effluent liquide hydrotraité dont au moins une partie est recyclé en tête de chaque zone catalytique de l'étape a) comme expliqué ci dessus.

Dans le cas du traitement de l'huile de soja, on recycle 125 L/h de l'effluent liquide hydrotraité vers la première zone catalytique, et 22.5 L/h vers la seconde zone catalytique. La totalité de l'effluent liquide hydrotraité non recyclé est envoyé dans une zone d'hydroisomérisation.

Dans le cas du traitement de l'huile de palme, on recycle 50 L/h de l'effluent liquide hydrotraité vers la première zone catalytique, et 12.5 L/h vers la seconde zone catalytique. La totalité de l'effluent liquide hydrotraité non recyclé est envoyé dans une zone d'hydroisomérisation.

Le catalyseur d'hydroisomérisation est un catalyseur contenant un métal noble et une zéolithe 10 MR monodimensionnelle ZBM-30. Ce catalyseur est obtenu selon le mode opératoire décrit ci-après. La zéolithe ZBM-30 est synthétisée selon le brevet BASF EP-A-46504 avec le structurant organique triéthylènetétramine. La zéolithe ZBM-30 brute de synthèse est soumise à une calcination à 550 °C sous flux d'air sec durant 12 heures. La zéolithe H-ZBM-30 (forme acide) ainsi obtenue possède un rapport Si/AI de 45. La zéolithe est malaxée avec un gel d'alumine de type SB3 fourni par la société Condéa-Sasol. La pâte malaxée est alors extrudée au travers d'une filière de diamètre 1.4 mm. Les extrudés ainsi obtenus sont calcinés à 500 °C durant 2 heures sous air. La teneur pondérale H-ZBM-30 est de 20 % poids. Ensuite, les extrudés de support sont soumis à une étape d'imprégnation à sec par une solution aqueuse du sel de platine Pt(NH₃)₄²⁺, 2OH-, ils subissent ensuite une étape de maturation en maturateur à eau durant 24 heures à température ambiante puis calcinés durant deux heures sous air sec en lit traversé à 500°C (rampe de montée en température de 5°C/min). La teneur pondérale en platine du catalyseur fini après calcination est de 0.48%.

Les conditions opératoires de l'étape d'hydroisomérisation sont décrites ci-dessous:
- VVH (volume de charge / volume de catalyseur / heure) = 1 h⁻¹
- pression totale de travail: 5 MPa
- rapport hydrogène / charge: 700 normaux litres / litre

La température est ajustée de manière à avoir une conversion de la fraction 150°C⁺ en fraction 150°C⁻ inférieure à 10% en poids lors de l'hydroisomérisation. Avant test, le catalyseur subit une étape de réduction dans les conditions opératoires suivantes:
- débit d'hydrogène: 1600 normaux litres par heure et par litre de catalyseur
- montée de température ambiante 120°C: 10 °C/min
- palier d'une heure à 120°C
- montée de 120°C à 450°C à 5°C/min
- palier de deux heures à 450°C
- pression : 0,1 MPa

L'effluent hydroisomérisé est ensuite caractérisé. Les rendements et les propriétés carburant sont reportés dans les tableau 4, 5 et 6.

**Tableau 4 : rendement de la section hydroisomérisation (en % poids par rapport à la charge entrant dans l'étape d'hydroisomérisation**

| | Rendement (%pds) | |
|---|---|---|
| | Cas de l'huile de Soja | Cas de l'huile de Palme |
| Rendement coupe C₁-C₄ [%poids] | 1 | 1 |
| Rendement coupe 150°C- (coupe naphta [%poids] | 9,2 | 8,8 |
| Rendement coupe 150°C-250°C (coupe kérosène [%poids] | 31,8 | 37,2 |
| Rendement coupe 250°C + (coupe gazole) [%poids] | 58 | 53 |

**Tableau 5 : caractérisation de la base gazole (coupe 250°C+)**

| | Cas de l'huile de Soja | Cas de l'huile dePalme |
|---|---|---|
| Indice de cétane (ASTMD613) | 80 | 75 |
| Température limite de filtrabilité (°C) | -15 | -20 |
| soufre (ppm pds) | 1 | 1 |
| densité (kg/m3) | 790 | 785 |
| teneur en aromatiques (% poids) | <0,2 | <0,2 |

La spécification densité est atteinte par mélange avec un gazole pétrolier de densité supérieure.

**Tableau 6 : caractérisation de la coupe kérosène (coupe 150-250°C)**

| | Cas de l'huile de Soja | Cas de l'huile de Palme |
|---|---|---|
| densité (kg/m3) | 775 | 770 |
| point de fumée (mm) | 30 | 30 |
| viscosité (mm2/s) à -20°C inférieure à 8 | 6 | 5 |

Les spécifications densité, point de disparition des cristaux et point éclair sont atteints par mélange avec un kérosène pétrolier.

L'enchaînement décrit permet, à partir de charges d'origine renouvelable, de produire des bases gazoles ainsi qu'une coupe kérosène d'excellente qualité, en terme d'indice de cétane et de propriétés à froid notamment et aussi de limiter la formation d'oxyde de carbone par la mise en oeuvre d'un catalyseur favorisant la voie hydrodésoxygénation.

## Revendications

1. Procédé de traitement de charges issues de sources renouvelables comprenant :
- une étape a) d'hydrotraitement comprenant au moins deux zones catalytiques dans laquelle le flux entrant comprenant ladite charge en mélange avec au moins une partie d'un effluent liquide hydrotraité issu de l'étape b) et un gaz riche en hydrogène, est introduit dans la première zone catalytique à une température comprise entre 150 et 260 °C, et dans laquelle l'effluent issu de la première zone catalytique est ensuite introduit, en mélange avec au moins une partie d'un l'effluent liquide hydrotraité issu de l'étape b), et préchauffé, dans la ou les zones catalytiques suivantes à une température comprise entre 260 et 320 °C,
- une étape b) de séparation de l'effluent issu de l'étape a) d'hydrotraitement permettant la séparation d'un effluent gazeux et d'un effluent liquide hydrotraité dont au moins une partie est recyclée en tête de chaque zone catalytique de l'étape a),
ledit procédé mettant en oeuvre dans au moins la ou les zones catalytiques suivants la première de l'étape a) d'hydrotraitement, un catalyseur massique ou supporté comprenant une phase active constituée d'au moins un élément du groupe VIB et d'au moins un élément du groupe VIII, lesdits éléments étant sous forme sulfure et le rapport atomique du métal (ou métaux) du groupe VIII sur métal (ou métaux) du groupe VIB, étant strictement supérieur à 0 et inférieur à 0,095.

2. Procédé selon la revendication 1 dans lequel le flux entrant est introduit dans la première zone catalytique à une température comprise entre 180 et 210 °C.

3. Procédé selon l'une des revendications 1 ou 2 dans lequel ledit effluent liquide hydrotraité issu de l'étape b) de séparation est soit refroidi, soit pré-chauffé, avant d'être recyclé en tête de la première zone catalytique de l'étape a) d'hydrotraitement.

4. Procédé selon l'une des revendications 1 à 3 dans lequel le catalyseur utilisé dans la première zone catalytique de l'étape a) d'hydrotraitement est un catalyseur comprenant au moins un métal du groupe VIII choisi parmi le nickel et le cobalt et/et au moins un métal du groupe VIB choisi parmi le molybdène et le tungstène, pris seuls ou en mélange et un support choisi dans le groupe formé par l'alumine, la silice, les silices-alumines, la magnésie, les argiles et les mélanges d'au moins deux de ces minéraux.

5. Procédé selon l'une des revendications 1 à 3 dans lequel le catalyseur utilisé dans la première zone catalytique de l'étape a) d'hydrotraitement est un catalyseur massique ou supporté comprenant une phase active constituée d'au moins un élément du groupe VIB et d'au moins un élément du groupe VIII, lesdits éléments étant sous forme sulfure et le rapport atomique du métal (ou métaux) du groupe VIII sur métal (ou métaux) du groupe VIB, étant strictement supérieur à 0 et inférieur à 0,095.

6. Procédé selon la revendication 5 dans lequel ledit catalyseur supporté comprend un élément dopant choisi parmi le phosphore, le bore et le silicium, déposé sur le support.

7. Procédé selon l'une des revendications 1 à 6 dans lequel l'étape a) d'hydrotraitement comprend deux zones catalytiques.

8. Procédé selon l'une des revendications 1 à 7 dans lequel ledit effluent issu de la première zone catalytique est ensuite introduit, en mélange avec au moins une partie d'un l'effluent liquide hydrotraité issu de l'étape b) et préchauffé, dans la zone catalytique suivante appelée deuxième zone catalytique, à une température supérieure à 300°C.

9. Procédé selon l'une des revendications 1 à 8 dans lequel le catalyseur mis en oeuvre dans la deuxième zone catalytique de l'étape a) d'hydrotraitement est identique à celui utilisé dans la première zone catalytique de l'étape a).

10. Procédé selon l'une des revendications 1 à 9 dans lequel le taux de recycle global est compris entre 1 et 5.

11. Procédé selon l'une des revendications 1 à 10 dans lequel au moins une partie de l'effluent liquide hydrotraité non recyclé subit ensuite une étape d'hydroisomérisation en présence d'un catalyseur d'hydroisomérisation sélective.

12. Procédé selon la revendications 11 dans lequel le catalyseur d'hydroisomérisation comprend au moins un métal du groupe VIII et/ou au moins un métal du groupe VIB en tant que fonction hydrodéshydrogénante et au moins un tamis moléculaire ou un support minéral amorphe en tant que fonction hydroisomérisante.

13. Procédé selon la revendications 12 dans lequel ledit tamis moléculaire est un tamis moléculaire zéolithique 10 MR monodimensionnel ZBM-30 synthétisée avec le structurant organique triéthylènetétramine.

14. Procédé selon l'une des revendications 11 à 13 dans lequel l'étape d'hydroisomérisation opère à une température comprise entre 150 et 500°C, à une pression comprise entre 1 MPa et 10 MPa, à une vitesse volumique horaire avantageusement comprise entre 0,1 h⁻¹ et 10 h⁻¹, à un débit d'hydrogène tel que le rapport volumique hydrogène/hydrocarbures est avantageusement compris entre 70 et 1000 Nm³/m³ de charge.

15. Procédé selon l'une des revendications 1 à 14 dans lequel les charges issues de sources renouvelables sont choisies parmi les huiles et graisses d'origine végétale ou animale, ou des mélanges de telles charges, contenant des triglycérides et/ou des acides gras libres et/ou des esters, lesdites huiles végétales pouvant être brutes ou raffinées, totalement ou en partie, et issues des végétaux : colza, tournesol, soja, palme, palmiste, olive, noix de coco, et jatropha.

## Claims

1. Method of treating feeds from renewable sources comprising:
- a hydrotreatment stage a) comprising at least two catalytic zones in which the entry stream comprising said feed mixed with at least a part of hydrotreated liquid effluent from stage b) and a hydrogen-rich gas is introduced into the first catalytic zone at a temperature comprised between 150 and 260°C, and in which the effluent from the first catalytic zone is then introduced, mixed with at least a part of the hydrotreated liquid effluent from stage b), and preheated, into the following catalytic zone or zones at a temperature comprised between 260 and 320°C,
- a stage b) of separation of the effluent from the hydrotreatment stage a) permitting the separation of a gaseous effluent and of a hydrotreated liquid effluent of which at least a part is recycled at the top of each catalytic zone of stage a),
said method using, in at least the catalytic zone or zones following the first of the hydrotreatment stage a), a bulk or supported catalyst comprising an active phase constituted by at least one group VIB element and at least one group VIII element, said elements being in sulphide form and the atomic ratio of the group VIII metal (or metals) to the group VIB metal (or metals) being strictly greater than 0 and less than 0.095.

2. Method according to claim 1 in which the entry stream is introduced into the first catalytic zone at a temperature comprised between 180 and 210°C.

3. Method according to one of claims 1 or 2 in which said hydrotreated liquid effluent from the separation stage b) is either cooled, or preheated, before being recycled at the top of the first catalytic zone of the hydrotreatment stage a).

4. Method according to one of claims 1 to 3 in which the catalyst used in the first catalytic zone of the hydrotreatment stage a) is a catalyst comprising at least one group VIII metal chosen from nickel and cobalt and/or at least one group VIB metal chosen from molybdenum and tungsten, alone or mixed and a support chosen from the group formed by alumina, silica, the silica-aluminas, magnesia, clays and the mixtures of at least two of these minerals.

5. Method according to one of claims 1 to 3 in which the catalyst used in the first catalytic zone of the hydrotreatment stage a) is a bulk or supported catalyst comprising an active phase constituted by at least one group VIB element and at least one group VIII element, said elements being in sulphide form and the atomic ratio of the group VIII metal (or metals) to the group VIB metal (or metals) being strictly greater than 0 and less than 0.095.

6. Method according to claim 5 in which said supported catalyst comprises a doping element chosen from phosphorus, boron and silicon, deposited on the support.

7. Method according to one of claims 1 to 6 in which the hydrotreatment stage a) comprises two catalytic zones.

8. Method according to one of claims I to 7 in which said effluent from the first catalytic zone is then introduced, mixed with at least a part of the hydrotreated liquid effluent from stage b) and preheated, into the following catalytic zone called second catalytic zone, at a temperature greater than 300°C.

9. Method according to one of claims I to 8 in which the catalyst used in the second catalytic zone of the hydrotreatment stage a) is identical to that used in the first catalytic zone of stage a).

10. Method according to one of claims 1 to 9 in which the overall recycle rate is comprised between 1 and 5.

11. Method according to one of claims 1 to 10 in which at least a part of the non-recycled hydrotreated liquid effluent then undergoes a hydroisomerization stage in the presence of a selective hydroisomerization catalyst.

12. Method according to claim 11 in which the hydroisomerization catalyst comprises at least one group VIII metal and/or at least one group VIB metal as hydrodehydrogenating function and at least one molecular sieve or an amorphous mineral support as hydroisomerizing function.

13. Method according to claim 12 in which said molecular sieve is a 10 MR one-dimensional ZBM-30 zeolite molecular sieve synthesized with the organic structuring agent triethylenetetramine.

14. Method according to one of claims 11 to 13 in which the hydroisomerization stage operates at a temperature comprised between 150 and 500°C, at a pressure comprised between I MPa and 10 MPa, at an hourly space velocity advantageously comprised between 0.1 h⁻¹ and 10 h⁻¹, at a hydrogen flow rate such that the hydrogen/hydrocarbons volume ratio is advantageously comprised between 70 and 1000 Nm³/m³ of feed.

15. Method according to one of claims I to 14 in which the feeds from renewable sources are chosen from oils and fats of vegetable or animal origin, or mixtures of such feeds, containing triglycerides and/or free fatty acids and/or esters, said vegetable oils being able to be raw or refined, totally or in part, and from the plants: colza, sunflower, soya, palm , cabbage palm , olive, coconut, and jatropha.

## Patentansprüche

1. Verfahren zur Behandlung von Beschickungen, die aus emeuerbaren Quellen stammen, umfassend:
- einen Schritt a) zur hydrierenden Behandlung, umfassend mindestens zwei katalytische Zonen, wobei der Eingangsstrom, der die Beschickung als Gemisch mit mindestens einem Teil eines flüssigen hydrobehandelten Abflusses aus Schritt b) und eines wasserstoffreichen Gases umfasst, in die erste katalytische Zone bei einer Temperatur im Bereich zwischen 150 und 260 °C eingeführt wird, und wobei der Abfluss aus der ersten katalytischen Zone anschließend als Gemisch mit mindestens einem Teil eines flüssigen hydrobehendelten Abflusses aus Schritt b) in die folgenden katalytische(n) Zone(n) bei einer Temperatur im Bereich zwischen 260 und 320 °C eingeführt und vorerhitzt wird,
- einen Schritt b) zur Trennung des Abflusses aus Schritt a) zur hydrierenden Behandlung, der die Trennung eines gasförmigen Abflusses und eines hydrobehandelten flüssigen Abflusses ermöglicht, wovon mindestens ein Teil an den Kopf jeder katalytischen Zone aus Schritt a) zurückgeführt wird,
wobei in dem Verfahren in mindestens der oder den katalytischen Zonen, die auf die erste aus Schritt a) zur hydrierenden Behandlung folgen, ein Vollkatalysator oder ein Trägerkatalysator eingesetzt wird, umfassend eine aktive Phase, die aus mindestens einem Element der Gruppe VIB und mindestens einem Element der Gruppe VIII besteht, wobei die Elemente in Sulfidform vorliegen und das Atomverhältnis des Metalls (oder der Metalle) der Gruppe VIII zum Metall (oder den Metallen) der Gruppe VIB exakt größer als 0 und kleiner als 0,095 ist.

2. Verfahren nach Anspruch 1, wobei der Eingangsstrom in die erste katalytische Zone bei einer Temperatur im Bereich zwischen 180 und 210°C eingeführt wird.

3. Verfahren nach einem der Ansprüche 1 oder 2, wobei der hydrobehandelte flüssige Abfluss aus Schritt b) zur Trennung entweder abgekühlt oder vorerhitzt wird, bevor er an den Kopf der ersten katalytische Zone aus Schritt a) zur hydrierenden Behandlung zurückgeführt wird.

4. Verfahren nach einem der Ansprüche 1 bis 3, wobei der Katalysator, der in der ersten katalytischen Zone aus Schritt a) zur hydrierenden Behandlung verwendet wird, ein Katalysator ist, umfassend mindestens ein Metall der Gruppe VIII, ausgewählt aus Nickel und Cobalt und/oder mindestens ein Metall der Gruppe VIB, ausgewählt aus Molybdän und Wolfram, allein oder als Gemisch und einen Träger, ausgewählt aus der Gruppe bestehend aus Aluminiumoxid, Siliciumdioxid, Siliciumdioxiden-Aluminiumoxiden, Magnesiumoxid, Tonen und Gemischen aus mindestens zwei dieser Mineralien.

5. Verfahren nach einem der Ansprüche 1 bis 3, wobei der Katalysator, der in der ersten katalytischen Zone aus Schritt a) zur hydrierenden Behandlung verwendet wird, ein Vollkatalysator oder ein Trägerkatalysator ist, umfassend eine aktive Phase, die aus mindestens einem Element der Gruppe VIB und mindestens einem Element der Gruppe VIII besteht, wobei die Elemente in Sulfidform vorliegen und das Atomverhältnis des Metalls (oder der Metalle) der Gruppe VIII zum Metall (oder den Metallen) der Gruppe VIB exakt größer als 0 und kleiner als 0,095 ist.

6. Verfahren nach Anspruch 5, wobei der Trägerkatalysator ein dotierendes Element umfasst, ausgewählt aus Phosphor, Bor und Silicium, das auf dem Träger abgelagert ist.

7. Verfahren nach einem der Ansprüche 1 bis 6, wobei Schritt a) zur hydrierenden Behandlung zwei katalytische Zonen umfasst.

8. Verfahren nach einem der Ansprüche 1 bis 7, wobei der Abfluss aus der ersten katalytischen Zone anschließend als Gemisch mit mindestens einem Teil eines hydrobehandelten und vorerhitzten flüssigen Abflusses aus Schritt b) in die folgende katalytische Zone, genannt zweite katalytische Zone, bei einer Temperatur oberhalb von 300 °C eingeführt wird.

9. Verfahren nach einem der Ansprüche 1 bis 8, wobei der Katalysator, der in der zweiten katalytischen Zone aus Schritt a) zur hydrierenden Behandlung eingesetzt wird, identisch mit dem Katalysator ist, der in der ersten katalytischen Zone aus Schritt a) verwendet wird.

10. Verfahren nach einem der Ansprüche 1 bis 9, wobei die gesamte Rückführrate im Bereich zwischen 1 und 5 liegt.

11. Verfahren nach einem der Ansprüche 1 bis 10, wobei mindestens ein Teil des nicht rückgeführten hydrobehandelten flüssigen Abflusses anschließend einem Schritt zur Hydroisomerisierung in Gegenwart eines selektiven Hydroisomerisierungskatalysators unterzogen wird.

12. Verfahren nach Anspruch 11, wobei der Hydroisomerisierungskatalysator mindestens ein Metall der Gruppe VIII und/oder mindestens ein Metall der Gruppe VIB als hydrierende-dehydrierende Funktion umfasst und mindestens ein Molekularsieb oder einen amorphen mineralischen Träger als hydroisomerisierende Funktion umfasst.

13. Verfahren nach Anspruch 12, wobei das Molekularsieb ein eindimensionales zeolithisches ZBM-30-Molekularsieb (10MR), synthetisiert mit dem organischen Strukturmittel Triethylentetramin, ist.

14. Verfahren nach einem der Ansprüche 11 bis 13, wobei der Schritt zur Hydroisomerisierung bei einer Temperatur im Bereich zwischen 150 und 500 °C, bei einem Druck im Bereich zwischen 1 MPa und 10 MPa, bei einer Raumgeschwindigkeit pro Stunde vorteilhafterweise im Bereich zwischen 0,1 h⁻¹ und 10 h⁻¹, bei einem Wasserstoffdurchsatz, so dass das Volumenverhältnis Wasserstoff/Kohlenwasserstoffe vorteilhafterweise im Bereich zwischen 70 und 1.000 Nm³/m³ Beschickung liegt, betrieben wird.

15. Verfahren nach einem der Ansprüche 1 bis 14, wobei die Beschickungen, die aus erneuerbaren Quellen stammen, ausgewählt sind aus Ölen und Fetten pflanzlichen oder tierischen Ursprungs, oder Gemischen solcher Beschickungen, die Triglyceride und/oder freie Fettsäuren und/oder Ester enthalten, wobei die pflanzlichen Öle ganz oder teilweise roh oder raffiniert sein können und aus den folgenden Pflanzen stammen können: Raps, Sonnenblume, Soja, Palme, Kohlpalme, Olive, Kokosnuss und Jatropha.
